# EUROPEAN PATENT APPLICATION

(11) **EP 4 521 395 A1**
(43) Date of publication of application: **12.03.2025**
(21) Application number: 23823022.1
(22) Date of filing: 08.06.2023
(51) Int. Cl.: G10L 15/22

(54) **VOICE CONTROL METHOD, APPARATUS AND DEVICE**

(30) Priority: 13.06.2022 CN 202210667673
(71) Applicant: Huawei Technologies Co., Ltd., Shenzhen, Guangdong 518129 (CN)
(72) Inventor: SONG, Kaikai, Shenzhen, Guangdong 518129 (CN); ZHOU, Jianhui, Shenzhen, Guangdong 518129 (CN); REN, Duo, Shenzhen, Guangdong 518129 (CN); LIU, Qi, Shenzhen, Guangdong 518129 (CN)
(74) Representative: Epping - Hermann - Fischer
(86) International application number: PCT/CN2023/099155
(87) International publication number: WO 2023/241454

(57) **Abstract**

This application provides a speech control method, an apparatus, and a device. The method includes: obtaining a speech stream that is input by a user, where the speech stream includes at least two intents; determining, based on the speech stream, an instruction corresponding to each intent in a first intent, where the first intent includes a part of the at least two intents; and executing, in a first sequence, the instruction corresponding to each intent in the first intent, and determining an instruction corresponding to each intent in a second intent, until an instruction corresponding to each intent in the at least two intents is executed, where the first sequence is a delivery sequence of the at least two intents in the speech stream, and the second intent includes at least one intent that is in the at least two intents and that is arranged after the first intent. **In** this way, a one-sentence multi-instruction/intent function is implemented, and speech interaction experience of the user is improved.

## Description

This application claims priority to Chinese Patent Application No. 202210667673.7, filed with the China National Intellectual Property Administration on June 13, 2022 and entitled "SPEECH CONTROL METHOD, APPARATUS, AND DEVICE", which is incorporated herein by reference in its entirety.

### TECHNICAL FIELD

This application relates to the field of terminal technologies, and in particular, to a speech control method, an apparatus, and a device.

### BACKGROUND

With intelligence of a terminal device, the terminal device can provide a speech interaction function for a user, so that the user can implement, by using the terminal device, intents such as playing a song, controlling startup and shutdown of another device, navigation, and making a call. However, due to limited hardware and software performance, the terminal device can recognize only one intent in a speech stream, and a requirement that the user wants to implement a plurality of intents at a time by using the terminal device cannot be met, thereby affecting speech interaction experience of the user.

### SUMMARY

This application provides a speech control method, an apparatus, and a device, to implement a one-sentence multi-instruction/intent function, and improve speech interaction experience of a user. According to a first aspect, this application provides a speech control method. The method includes:
obtaining a speech stream that is input by a user, where the speech stream includes at least two intents;
determining, based on the speech stream, an instruction corresponding to each intent in a first intent, where the first intent includes a part of the at least two intents; and
executing, in a first sequence, the instruction corresponding to each intent in the first intent, and determining an instruction corresponding to each intent in a second intent, until an instruction corresponding to each intent in the at least two intents is executed, where the first sequence is a delivery sequence of the at least two intents in the speech stream, and the second intent includes at least one intent that is in the at least two intents and that is arranged after the first intent.

According to the method provided in the first aspect, a terminal device may obtain the speech stream, to learn, based on the at least two intents in the speech stream, of a requirement for requesting an asynchronous processing service. The terminal device determines, based on the speech stream, instructions corresponding to a part of the at least two intents. The terminal device may execute, in the delivery sequence of the at least two intents in the speech stream, the instructions corresponding to the part of the at least two intents, and asynchronously determine an instruction corresponding to a remaining intent in the at least two intents. In this way, a one-sentence multi-instruction function is implemented, a processing response delay is shortened, and user experience is improved.

In a possible design, the terminal device includes a first application module and a third application module.

The method specifically includes:
the first application module obtains the speech stream;
the third application module determines, based on the at least two intents corresponding to the speech stream, the instruction corresponding to each intent in the first intent, and continues to determine the instruction corresponding to each intent in the second intent; and
the first application module obtains, from the third application module, the instruction corresponding to each intent in the first intent, executes, in the first sequence, the instruction corresponding to each intent in the first intent, and when determining that instructions corresponding to all of the at least two intents are not completely obtained, obtains, from the third application module, the instruction corresponding to each intent in the second intent, until the instructions corresponding to all of the at least two intents are completely obtained.

In a possible design, the method further includes:
the first application module obtains the at least two intents based on the speech stream; and
the first application module sends the at least two intents to the third application module. In a possible design, the first application module is a voice assistant application, and the third application module is a dialogue management module; or the first application module and the third application module are modules in a voice assistant application.

In a possible design, the terminal device further includes a second application module.

The method further includes:
the first application module sends the speech stream to the second application module;
the second application module obtains the at least two intents based on the speech stream; and
the second application module sends the at least two intents to the third application module; and
that the first application module obtains, from the third application module, an instruction corresponding to any intent includes:
   the first application module obtains, from the third application module through the second application module, the instruction corresponding to any intent.

In a possible design, the first application module is a voice assistant application, the second application module is a central control unit, and the third application module is a dialogue management module.

In a possible design, the first intent includes only one intent, and the method specifically includes:
the third application module determines an instruction corresponding to the first intent, where an initial intent of the first intent is an intent arranged in a 1^{st} place in the at least two intents in the first sequence, and the instruction corresponding to the first intent is determined based on a historical dialogue status;
the first application module obtains, from the third application module, the instruction corresponding to the first intent;
the first application module executes the instruction corresponding to the first intent, and when determining that the instructions corresponding to all of the at least two intents are not completely obtained, sends a first request to the third application module, where the first request is used to request the instruction corresponding to each intent in the second intent;
after receiving the first request, the third application module updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
the first application module continues to obtain, from the third application module, the instruction corresponding to the updated first intent, and stops sending the first request to the third application module when determining that the instructions corresponding to all of the at least two intents are obtained.

In a possible design, the method specifically includes:
the third application module determines the instruction corresponding to the first intent and a remaining intent, where the remaining intent includes all intents that are in the at least two intents and that are arranged after the first intent, and an arrangement sequence of the remaining intent is consistent with the first sequence;
the first application module obtains, from the third application module, the instruction corresponding to the first intent and the remaining intent;
the first application module executes the instruction corresponding to the first intent, and when determining that the remaining intent is not null, sends the first request to the third application module, where the first request includes the remaining intent;
after receiving the first request, the third application module updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
the first application module continues to obtain, from the third application module, the instruction corresponding to the updated first intent and the updated remaining intent, and stops sending the first request to the third application module when determining that the remaining intent is null.

In a possible design, the method specifically includes:
the third application module determines the instruction corresponding to the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
the first application module obtains, from the third application module, the instruction corresponding to the first intent, the remaining intent, and the dialogue status;
the first application module executes the instruction corresponding to the first intent, and after determining that the remaining intent is not null, sends the first request to the third application module, where the first request includes the remaining intent and the dialogue status;
after receiving the first request, the third application module updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
the first application module continues to obtain, from the third application module, the instruction corresponding to the updated first intent, the updated remaining intent, and the updated dialogue status, and stops sending the first request to the third application module when determining that the remaining intent is null.

In a possible design, the first intent includes only a 1^{st} intent, and the 1^{st} intent is an intent arranged in a 1^{st} place in the at least two intents in the first sequence.

The method specifically includes:
the third application module determines the instruction corresponding to each intent in the at least two intents and a first identifier, and writes, into a first queue corresponding to the first identifier, an instruction corresponding to each intent in a remaining intent, where the remaining intent includes another intent other than the 1^{st} intent in the at least two intents, and an arrangement sequence of queue elements in the first queue is consistent with the first sequence;
the first application module obtains, from the third application module, an instruction corresponding to the 1^{st} intent and the first identifier;
the first application module executes the instruction corresponding to the 1^{st} intent, and extracts, from the first queue based on the first identifier, a written queue element arranged in sequence as the second intent, where an initial queue element of the written queue element includes at least an instruction corresponding to a next intent that is in the remaining intent and that is arranged after the 1^{st} intent; and
the first application module executes, in the first sequence, an instruction corresponding to each intent corresponding to the written queue element, and when determining that the instructions corresponding to all of the at least two intents are not completely obtained, continues to extract, from the first queue based on the first identifier, a newly written queue element arranged after the written queue element, until it is determined that the instructions corresponding to all of the at least two intents are completely obtained.

In a possible design, the method further includes:
after an instruction corresponding to a last intent in the remaining intent is written into the first queue, the third application module writes, in the first queue, an end identifier after the instruction corresponding to the last intent in the remaining intent, where the end identifier indicates that no instruction corresponding to an intent exists in the first queue; and
that the first application module determines whether the instructions corresponding to all of the at least two intents are completely obtained includes:
   after determining that a last queue element in the written queue element is the end identifier, the first application module determines that the instructions corresponding to all of the at least two intents are completely obtained; or
   after determining that a last queue element in the written queue element is not the end identifier, the first application module determines that the instructions corresponding to all of the at least two intents are not completely obtained.

According to a second aspect, this application provides a speech control method. The method includes:
obtaining a speech stream that is input by a user, where the speech stream includes at least two intents;
sending the speech stream to a server;
receiving, from the server, an instruction corresponding to each intent in a first intent, where the first intent includes a part of the at least two intents;
executing, in a first sequence, the instruction corresponding to each intent in the first intent, where the first sequence is a delivery sequence of the at least two intents in the speech stream; and when determining that instructions corresponding to all of the at least two intents are not completely obtained, obtaining, from the server, an instruction corresponding to each intent in a second intent, where the second intent includes at least one intent that is in the at least two intents and that is arranged after the first intent; and
executing, in the first sequence, the instruction corresponding to each intent in the second intent, until an instruction corresponding to each intent in the at least two intents is executed. According to the method provided in the second aspect, a terminal device may obtain the speech stream, to learn, based on the at least two intents in the speech stream, of a requirement for requesting an asynchronous processing service. The terminal device sends the speech stream to the server, so that the server determines, based on the speech stream, the instruction corresponding to each intent in the at least two intents, and sends a part of the at least two intents to the terminal device. The terminal device may execute, in the delivery sequence of the at least two intents in the speech stream, instructions corresponding to the part of the at least two intents, and asynchronously obtain, from the server, an instruction corresponding to a remaining intent in the at least two intents. In this way, a one-sentence multi-instruction function is implemented, a processing response delay is shortened, and user experience is improved.

In a possible design, the first intent includes only one intent, and the method specifically includes:
receiving, from the server, an instruction corresponding to the first intent, where an initial intent of the first intent is an intent arranged in a 1^{st} place in the at least two intents in the first sequence, and the instruction corresponding to the first intent is determined based on a historical dialogue status;
executing the instruction corresponding to the first intent, and when determining that the instructions corresponding to all of the at least two intents are not completely obtained, sending a first request to the server, where the first request is used to request the instruction corresponding to each intent in the second intent, so that after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
continuing to obtain, from the server, the instruction corresponding to the updated first intent, and stopping sending the first request to the server when determining that the instructions corresponding to all of the at least two intents are obtained.

In a possible design, the method specifically includes:
receiving, from the server, the instruction corresponding to the first intent and a remaining intent, where the remaining intent includes all intents that are in the at least two intents and that are arranged after the first intent, and an arrangement sequence of the remaining intent is consistent with the first sequence;
executing the instruction corresponding to the first intent, and when determining that the instructions corresponding to all of the at least two intents are not completely obtained, sending the first request to the server, where the first request includes the remaining intent, so that after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
continuing to obtain, from the server, the instruction corresponding to the updated first intent and the updated remaining intent, and stopping sending the first request to the server when determining that the instructions corresponding to all of the at least two intents are obtained.

In a possible design, the method specifically includes:
receiving, from the server, the instruction corresponding to the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
executing the instruction corresponding to the first intent, and when determining that the instructions corresponding to all of the at least two intents are not completely obtained, sending the first request to the server, where the first request includes the remaining intent and the dialogue status, so that after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
continuing to obtain, from the server, the instruction corresponding to the updated first intent, the updated remaining intent, and the updated dialogue status, and stopping sending the first request to the server when determining that the instructions corresponding to all of the at least two intents are obtained.

In a possible design, the first intent includes only a 1^{st} intent, and the 1^{st} intent is an intent arranged in a 1^{st} place in the at least two intents in the first sequence.

The method specifically includes:
receiving, from the server, an instruction corresponding to the 1^{st} intent and a first identifier, where a first queue corresponding to the first identifier includes an instruction corresponding to each intent in a remaining intent, the remaining intent includes another intent other than the 1^{st} intent in the at least two intents, and an arrangement sequence of queue elements in the first queue is consistent with the first sequence;
executing the instruction corresponding to the 1^{st} intent, and sending the first identifier to the server, where the first identifier is used to request the instruction corresponding to each intent in the second intent;
receiving, from the server, a written queue element arranged in sequence in the first queue, where an initial queue element of the written queue element includes at least an instruction corresponding to a next intent that is in the remaining intent and that is arranged after the 1^{st} intent; and
executing, in the first sequence, an instruction corresponding to each intent corresponding to the written queue element, and when determining that the instructions corresponding to all of the at least two intents are not completely obtained, continuing to send the first identifier to the server, so that the server extracts, from the first queue based on the first identifier, a newly written queue element arranged after the written queue element, until it is determined that the instructions corresponding to all of the at least two intents are completely obtained.

In a possible design, the first queue further includes an end identifier arranged after an instruction corresponding to a last intent in the remaining intent, and the end identifier indicates that no instruction corresponding to an intent exists in the first queue.

The method further includes:
when a last queue element in the written queue element is the end identifier, determining that the instructions corresponding to all of the at least two intents are completely obtained; or
when a last queue element in the written queue element is not the end identifier, determining that the instructions corresponding to all of the at least two intents are not completely obtained.

According to a third aspect, this application provides a speech control method. The method includes:
receiving, from a terminal device, a speech stream that is input by a user, where the speech stream includes at least two intents;
determining an instruction corresponding to each intent in a first intent, where the first intent includes a part of the at least two intents;
sending the instruction corresponding to each intent in the first intent to the terminal device;
determining an instruction corresponding to each intent in a second intent, where the second intent includes at least one intent arranged after the first intent in the at least two intents in a first sequence, and the first sequence is a delivery sequence of the at least two intents in the speech stream; and
sending the instruction corresponding to each intent in the second intent to the terminal device.

In a possible design, the first intent includes only one intent, and the method specifically includes:
determining an instruction corresponding to the first intent, where an initial intent of the first intent is an intent arranged in a 1^{st} place in the at least two intents in the first sequence, and the instruction corresponding to the first intent is determined based on a historical dialogue status;
sending the instruction corresponding to the first intent to the terminal device;
receiving a first request from the terminal device, where the first request is used to request the instruction corresponding to each intent in the second intent; and
after receiving the first request, updating the first intent to a next intent arranged after the first intent in the first sequence, updating the historical dialogue status to slot information corresponding to the at least two intents after the instruction corresponding to the first intent is executed, determining an instruction corresponding to an updated first intent, and sending the instruction corresponding to the updated first intent to the terminal device, until the first request is not received from the terminal device after first duration.

In a possible design, the method specifically includes:
determining the instruction corresponding to the first intent and a remaining intent, where the remaining intent includes all intents that are in the at least two intents and that are arranged after the first intent, and an arrangement sequence of the remaining intent is consistent with the first sequence;
sending the instruction corresponding to the first intent and the remaining intent to the terminal device;
receiving the first request from the terminal device, where the first request includes the remaining intent; and
after receiving the first request, updating the first intent to an intent arranged in a 1^{st} place in the remaining intent in the first sequence, updating the historical dialogue status to the slot information corresponding to the at least two intents after the instruction corresponding to the first intent is executed, determining an instruction corresponding to an updated first intent and an updated remaining intent, and sending the instruction corresponding to the updated first intent and the updated remaining intent to the terminal device, until the first request is not received from the terminal device after the first duration.

In a possible design, the method specifically includes:
determining the instruction corresponding to the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
sending the instruction corresponding to the first intent, the remaining intent, and the dialogue status to the terminal device;
receiving the first request from the terminal device, where the first request includes the remaining intent and the dialogue status; and
after receiving the first request, updating the first intent to the intent arranged in the 1^{st} place in the remaining intent in the first sequence, updating the historical dialogue status to the dialogue status, determining the instruction corresponding to the updated first intent, the updated remaining intent, and the updated dialogue status, and sending the instruction corresponding to the updated first intent, the updated remaining intent, and the updated dialogue status to the terminal device, until the first request is not received from the terminal device after the first duration.

In a possible design, the first intent includes only a 1^{st} intent, and the 1^{st} intent is an intent arranged in a 1^{st} place in the at least two intents in the first sequence.

An instruction corresponding to each intent in the at least two intents and a first identifier are determined.

An instruction corresponding to each intent in a remaining intent is written into a first queue corresponding to the first identifier, where the remaining intent includes another intent other than the 1^{st} intent in the at least two intents, and an arrangement sequence of queue elements in the first queue is consistent with the first sequence; and an instruction corresponding to the 1^{st} intent and the first identifier are sent to the terminal device.

The first identifier is received from the terminal device, where the first identifier is used to request the instruction corresponding to each intent in the second intent.

After the first identifier is received, a written queue element arranged in sequence is extracted from the first queue based on the first identifier, where an initial queue element of the written queue element includes at least an instruction corresponding to a next intent that is in the remaining intent and that is arranged after the 1^{st} intent; and the written queue element is sent to the terminal device, until the first identifier is not received from the terminal device after second duration.

In a possible design, the method further includes:
after an instruction corresponding to a last intent in the remaining intent is written into the first queue, writing, in the first queue, an end identifier after the instruction corresponding to the last intent in the remaining intent, where the end identifier indicates that no instruction corresponding to an intent exists in the first queue.

For beneficial effects of the method provided in the third aspect and the possible designs of the third aspect, refer to the beneficial effects brought by the second aspect and the possible implementations of the second aspect. Details are not described herein again.

According to a fourth aspect, this application provides a speech control method, including:
obtaining a speech stream that is input by a user, where the speech stream includes at least two intents;
sending the speech stream to a server, and determining an instruction corresponding to each intent in the at least two intents;
obtaining, from a terminal device and/or the server, an instruction corresponding to each intent in a first intent, where the first intent includes a part of the at least two intents;
executing, in a first sequence, the instruction corresponding to each intent in the first intent, where the first sequence is a delivery sequence of the at least two intents in the speech stream; and when determining that instructions corresponding to all of the at least two intents are not completely obtained, obtaining, from the terminal device and/or the server, an instruction corresponding to each intent in a second intent, where the second intent includes at least one intent that is in the at least two intents and that is arranged after the first intent; and
executing, in the first sequence, the instruction corresponding to each intent in the second intent, until the instruction corresponding to each intent in the at least two intents is executed.

According to the method provided in the fourth aspect, the terminal device may obtain the speech stream, to learn, based on the at least two intents in the speech stream, of a requirement for requesting an asynchronous processing service. The terminal device sends the speech stream to the server, so that the server determines, based on the speech stream, the instruction corresponding to each intent in the at least two intents, and the terminal device determines, based on the speech stream, the instruction corresponding to each intent in the at least two intents. The terminal device may obtain a part of the at least two intents from the terminal device and/or the server. The terminal device may execute, in the delivery sequence of the at least two intents in the speech stream, instructions corresponding to the part of the at least two intents, and asynchronously obtain, from the terminal device and/or the server, an instruction corresponding to a remaining intent in the at least two intents. In this way, the terminal device implements a one-sentence multi-instruction function in a device-cloud collaboration manner, to ensure that the terminal device can request an asynchronous processing service in various cases such as a poor network condition or poor performance of the terminal device, thereby shortening a processing response delay and improving user experience.

In a possible design, the first intent includes only one intent, and the method specifically includes:
obtaining, from the terminal device and/or the server, the instruction corresponding to each intent in the first intent, where an initial intent of the first intent is an intent arranged in a 1^{st} place in the at least two intents in the first sequence, and an instruction corresponding to the first intent is determined based on a historical dialogue status;
executing the instruction corresponding to the first intent, and when determining that the instructions corresponding to all of the at least two intents are not completely obtained, sending a first request to the server, where the first request is used to request the instruction corresponding to each intent in the second intent, so that after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
continuing to determine to obtain, from the terminal device and/or the server, the instruction corresponding to the updated first intent, and stopping sending the first request to the server when determining that the instructions corresponding to all of the at least two intents are obtained.

In a possible design, the method specifically includes:
obtaining, from the terminal device and/or the server, the instruction corresponding to each intent in the first intent and a remaining intent, where the remaining intent includes all intents that are in the at least two intents and that are arranged after the first intent, and an arrangement sequence of the remaining intent is consistent with the first sequence;
executing the instruction corresponding to the first intent, and when determining that the instructions corresponding to all of the at least two intents are not completely obtained, sending the first request to the server, where the first request includes the remaining intent, so that after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
continuing to determine to obtain, from the terminal device and/or the server, the instruction corresponding to the updated first intent and the updated remaining intent, and stopping sending the first request to the server when determining that the instructions corresponding to all of the at least two intents are obtained.

In a possible design, the method specifically includes:
obtaining, from the terminal device and/or the server, the instruction corresponding to each intent in the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
executing the instruction corresponding to the first intent, and when determining that the instructions corresponding to all of the at least two intents are not completely obtained, sending the first request to the server, where the first request includes the remaining intent and the dialogue status, so that after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
continuing to determine to obtain, from the terminal device and/or the server, the instruction corresponding to the updated first intent, the updated remaining intent, and the updated dialogue status, and stopping sending the first request to the server when determining that the instructions corresponding to all of the at least two intents are obtained.

According to a fifth aspect, this application provides a terminal device, including a memory and a processor. The memory is configured to store program instructions, and the processor is configured to invoke the program instructions in the memory, so that the terminal device performs the speech control method in any one of the first aspect and the possible designs of the first aspect.

According to a sixth aspect, this application provides a terminal device, including a memory and a processor. The memory is configured to store program instructions, and the processor is configured to invoke the program instructions in the memory, so that the terminal device performs the speech control method in any one of the second aspect and the possible designs of the second aspect.

According to a seventh aspect, this application provides a terminal device, including a memory and a processor. The memory is configured to store program instructions, and the processor is configured to invoke the program instructions in the memory, so that the terminal device performs the speech control method in any one of the fourth aspect and the possible designs of the fourth aspect.

According to an eighth aspect, this application provides a server, including a memory and a processor. The memory is configured to store program instructions, and the processor is configured to invoke the program instructions in the memory, so that the server performs the speech control method in any one of the third aspect and the possible designs of the third aspect.

According to a ninth aspect, this application provides a communication system, including a terminal device that performs the speech control method in any one of the second aspect and the possible designs of the second aspect, and a server that performs the speech control method in any one of the third aspect and the possible designs of the third aspect.

According to a tenth aspect, this application provides a communication system, including a terminal device that performs the speech control method in any one of the fourth aspect and the possible designs of the fourth aspect, and a server that performs the speech control method in any one of the third aspect and the possible designs of the third aspect.

According to an eleventh aspect, this application provides a chip system. The chip system is applied to a communication device including a memory and a sensor. The chip system includes a processor. When the processor executes computer instructions stored in the memory, the communication device performs the speech control method in any one of the foregoing aspects and any possible design of the aspect.

According to a twelfth aspect, this application provides a computer-readable storage medium. The computer-readable storage medium stores a computer program, and when the computer program is executed by a processor, a communication device is enabled to implement the speech control method in any one of the foregoing aspects and any possible design of the aspect.

According to a thirteenth aspect, this application provides a computer program product, including executable instructions. The executable instructions are stored in a readable storage medium. At least one processor of a communication device may read the executable instructions from the readable storage medium, and the at least one processor executes the executable instructions, to enable the communication device to implement the speech control method in any one of the foregoing aspects and any possible design of the aspect.

### BRIEF DESCRIPTION OF DRAWINGS

FIG. 1 is a functional block diagram of a vehicle according to an embodiment of this application;
FIG. 2 is a diagram of an architecture of a communication system according to an embodiment of this application;
FIG. 3 is a block diagram of a software structure of a terminal device according to an embodiment of this application;
FIG. 4A and FIG. 4B are a signaling flowchart of a speech control method according to an embodiment of this application;
FIG. 5A and FIG. 5B are a signaling flowchart of a speech control method according to an embodiment of this application;
FIG. 6A and FIG. 6B are a signaling flowchart of a speech control method according to an embodiment of this application;
FIG. 7 is a diagram of an architecture of a communication system according to an embodiment of this application;
FIG. 8A and FIG. 8B are a signaling flowchart of a speech control method according to an embodiment of this application;
FIG. 9 is a diagram of a scenario of a speech control method according to an embodiment of this application;
FIG. 10A and FIG. 10B each are a diagram of a human-computer interaction interface according to an embodiment of this application; and
FIG. 11 is a schematic flowchart of a speech control method according to an embodiment of this application.

### DESCRIPTION OF EMBODIMENTS

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, at least one of a, b, or c may represent: a, b, c, a combination of a and b, a combination of a and c, a combination of b and c, or a combination of a, b and c, where each of a, b, and c may be in a singular form or a plural form. In addition, terms "first" and "second" are merely used for a purpose of description, and shall not be understood as an indication or implication of relative importance. An orientation or position relationship indicated by the term such as "center", "vertical", "horizontal", "up", "down", "left", "right", "front", or "back" is based on an orientation or position relationship shown in the accompanying drawings, and is merely intended to facilitate description of this application and simplify description, but does not indicate or imply that a specified apparatus or element needs to have a specific orientation and be constructed and operated in a specific orientation. Therefore, such terms should not be construed as limitations on this application.

This application provides a speech control method, a terminal device, a server, a communication system, a chip, a computer-readable storage medium, and a computer program product. In an asynchronous processing manner, not only a terminal device is supported to implement a one-sentence multi-instruction function, but also a user is supported to input a speech stream in an oral manner, so that the user does not need to input the speech stream in a fixed format. This helps reduce a speech processing response delay of the terminal device, and improve user experience in using the terminal device.

The one-sentence multi-instruction function is also referred to as a one-sentence multi-intent function, and may be understood as a capability of recognizing a plurality of intents (that is, two or more intents) corresponding to a speech stream and executing instructions corresponding to all intents. The "one sentence" mentioned herein is not one sentence in a broad sense, but a speech stream that is input by a user at a time/at a breath, and may be one sentence or a plurality of sentences. In other words, the user may deliver a plurality of intents to a terminal device at a breath, and the user does not need to deliver the plurality of intents to the terminal device several times. Parameters such as a format, content, and a quantity of corresponding intents of a speech stream are not limited in this application.

The terminal device may include an internet of things (the internet of things, IoT) device like a vehicle, a speaker, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a television, a smart screen, a high-definition television, a 4K television, or a projector. A specific type of the terminal device is not limited in this application.

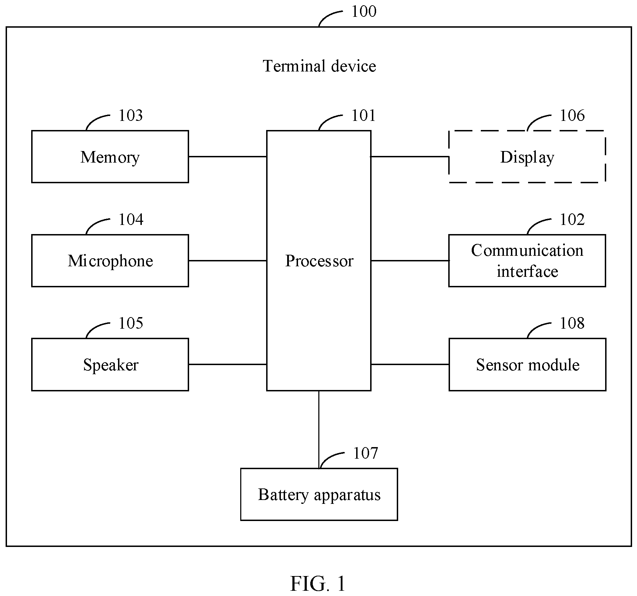

The following describes the terminal device in this application with reference to FIG. 1 by using an example in which the terminal device is a vehicle.

FIG. 1 is a functional block diagram of a vehicle according to an embodiment of this application. In some embodiments, as shown in FIG. 1, the terminal device 100 may include a processor 101, a communication interface 102, a memory 103, a microphone 104, a speaker 105, and the like. These components may communicate with each other by using one or more communication buses or signal cables (not shown in FIG. 1).

Each component of the terminal device 100 continues to be described below in detail with reference to FIG. 1.

The processor 101 is a control center of the terminal device 100, is connected to parts of the terminal device 100 through various interfaces and lines, and performs various functions of the terminal device 100 and data processing by running or executing an application stored in the memory 103 and invoking data stored in the memory 103.

In some embodiments, the processor 101 may include one or more processing units. For example, the processor 101 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a general-purpose central processing unit (central processing unit, CPU), a microprocessor, and/or a neural-network processing unit (neural-network processing unit, NPU). Different processing units may be independent components, or may be integrated into one or more processors.

The controller may be a nerve center and a command center of the terminal device 100. The controller may generate an operation control signal based on instruction operation code and a time sequence signal, to complete control of instruction fetching and instruction execution. The controller may control operations of components/modules in the terminal device 100, such as a steering system, a throttle, a braking unit, a sensor fusion algorithm, a computer vision system, a route control system, and an obstacle avoidance system.

In some other embodiments, a memory may be further disposed in the processor 101, to store instructions and data. In some embodiments, the memory in the processor 101 is a cache. The memory may store instructions or data just used or cyclically used by the processor 101. If the processor 101 needs to use the instructions or the data again, the processor 101 may directly invoke the instructions or the data from the memory. This avoids repeated access and reduces waiting time of the processor 101, thereby improving system efficiency. The processor 101 may run a software code/module of the speech control method provided in this application, to implement a one-sentence multi-instruction function of the terminal device 100.

The communication interface 102 may be a wired interface (for example, an Ethernet interface) or a wireless interface (for example, a cellular network interface or a wireless local area network interface). For example, the communication interface 102 may be specifically configured to communicate with a server, and is further configured to communicate with another terminal device such as a mobile phone or a television.

In some embodiments, the communication interface 102 may further provide an audio circuit between a user and the terminal device 100. The audio circuit may transmit, to the speaker 105, an electrical signal converted from received audio data, and the speaker 105 converts the electrical signal into a speech stream that can be heard by the user for output. In addition, the microphone 104 converts a collected speech stream (for example, a sound made by the user) into an electrical signal, and the audio circuit receives the electrical signal, converts the electrical signal into audio data, and then outputs the audio data. For example, the terminal device 100 sends the audio data to the processor 101 or a server that is communicatively connected to the terminal device 100, or outputs the audio data to the memory 103 for further processing.

The memory 103 is configured to store data (such as a road map, route information, a vehicle location, a traveling direction, a traveling speed, and other vehicle data), program code (an instruction/code for performing various functions of the terminal device 100), and the like. The processor 101 performs various functions of the terminal device 100 and data processing by running the data and the program code that are stored in the memory 103. The memory 103 mainly includes a program storage area and a data storage area. The program storage area may store an operating system (Operating System, OS), and an application required by at least one function (for example, a one-sentence multi-instruction function, a sound play function, or a speech collection function). The data storage area may store data (for example, audio data) created based on use of the speaker. In addition, the memory 103 may include a high-speed random access memory (RAM), and may further include a nonvolatile memory such as a magnetic disk storage device or a flash memory device, or another volatile solid storage device. In some embodiments, the memory 103 may store data such as a "wakeup word". In some other embodiments, the memory 103 may further store audio data such as a song, cross talk, or storytelling. In addition, the memory 103 may store various operating systems. The memory 103 may be independent, and is connected to the processor 101 by using the communication bus; or the memory 103 may be integrated with the processor 101.

In some embodiments, the memory 103 may be a read-only memory (read-only memory, ROM), may be a random access memory (random access memory, RAM), or may be an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer. However, this is not limited.

The microphone 104, also referred to as a "mike" or a "mic", is configured to collect a sound signal (for example, collect a sound made by the user), and convert the sound signal into an electrical signal. In some embodiments, one or more microphones 104, for example, a microphone array, may be disposed on the terminal device 100. In some other embodiments, in addition to collecting a speech stream, the microphone 104 may further implement a noise reduction function for the speech stream, or may further recognize a source of the speech stream, implement a directional recording function, or the like.

The speaker 105, also referred to as a "loudspeaker", is configured to convert an audio electrical signal into a speech stream. The terminal device 100 may play a speech stream such as music through the speaker 105.

In some embodiments, the microphone 104 and the speaker 105 are coupled to the processor 101. For example, after receiving a speech stream, the microphone 104 sends the speech stream or an audio electrical signal converted from the speech stream to the processor 101. The processor 101 determines whether to respond to the speech stream or the audio electrical signal, and if responding, performs a corresponding operation, for example, playing music through the speaker 105.

In addition, the terminal device 100 may include a display 106 (or a display screen), or may not include a display 106. The display 106 may be configured to display a display interface of an application (for example, a voice assistant app), for example, display a played song, display a current weather condition, or display an address book of a user. The display 106 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, a touch sensor may be disposed on the display 106 to form a touchscreen. This is not limited in this application. The touch sensor is configured to detect a touch operation performed on or near the touch sensor. The touch sensor may transfer the detected touch operation to the processor 101 to determine a type of a touch event. The processor 101 may provide a visual output related to the touch operation through the display 106.

In addition, the terminal device 100 may further include a battery apparatus 107 (such as a battery and a power management chip) that supplies power to each component. The battery may be logically connected to the processor 101 through the power management chip, to implement functions such as charging management, discharging management, and power consumption management by using the battery apparatus 107.

In addition, in addition to the microphone 104 and the speaker 105, the terminal device 100 may further include a sensor module 108. The sensor module 108 may include several sensors that sense information about an environment around the terminal device 100. For example, the sensor module 108 may include a camera lens, a positioning system (such as a GPS system, a BeiDou system, or another positioning system), an inertia measurement unit (inertial measurement unit, IMU), a radar, a laser rangefinder, and a camera. The sensor module 108 may further include sensors (such as an in-vehicle air quality monitor, a fuel gauge, and an oil thermometer) in an internal system of the monitored terminal device 100. One or more pieces of sensor data from these sensors may be used to detect an object and a corresponding feature (a position, a shape, a direction, a speed, or the like) of the object. Such detection and recognition are key functions for a safe operation of the terminal device 100.

It may be understood that the device structure shown in FIG. 1 does not constitute a specific limitation on the terminal device 100. In some other embodiments, the terminal device 100 may include more or fewer components than those shown in the figure, or combine some components, or split some components, or have different component arrangements. The components shown in the figure may be implemented by hardware, software, or a combination of software and hardware. Based on the foregoing descriptions, modules related to an asynchronous processing manner used for the speech control method in this application may include at least the following:
a voice assistant application (application, APP), a central control unit, an automatic speech recognition (automatic speech recognition, ASR) module, a natural language understanding (natural language understanding, NLU) module, and a dialogue management (dialogue management, DM) module. The central control unit is separately communicatively connected to the voice assistant app, the ASR module, the NLU module, and the DM module.

The voice assistant app is configured to: obtain a speech stream of a user, request an asynchronous processing service from the central control unit, obtain an instruction corresponding to each intent included in the speech stream from the central control unit, and execute the instruction corresponding to each intent.

The asynchronous processing service mentioned in this application may provide an asynchronous processing manner for a terminal device, so that the terminal device implements a one-sentence multi-instruction function. The asynchronous processing service may include but is not limited to at least one of a speech conversion service, an instruction transmission service, an asynchronous request service, an instruction storage service, or the like.

In some embodiments, the user may wake up/close the voice assistant app in a manner such as a speech, a touch operation, or a gesture, so that the voice assistant app can enable/disable the one-sentence multi-instruction function of the terminal device. The voice assistant app may display a corresponding user interface in a full-screen immersive mode or a floating display mode, to conveniently prompt the user to input a speech stream.

The voice assistant app and the terminal device usually belong to a same vendor. The voice assistant app is an application, and the voice assistant app may be loaded (or referred to as installed) at an application layer in an operating system of the terminal device.

In addition, the voice assistant app may alternatively not be loaded in the terminal device, but is loaded in another terminal device that is communicatively connected to the terminal device. The terminal device and the another terminal device may be in a wired or wireless connection, for example, a Wi-Fi direct connection, a Bluetooth connection, or a ZigBee connection. This is not limited in this application.

In a specific embodiment, the terminal device is a vehicle/speaker, the another terminal device is a mobile phone, the voice assistant app is installed in the mobile phone, and the user inputs a speech stream by using the voice assistant app, so that the vehicle/speaker implements a one-sentence multi-instruction function.

In addition, in this application, a software module in a manner such as an official account, a web page (web), an applet, or a quick app may be used to replace the voice assistant app.

The central control unit is configured to: receive a speech stream from the voice assistant app, and separately invoke the ASR module, the NLU module, and the DM module to provide an asynchronous processing service for the voice assistant app. It should be noted that, invoking and starting mentioned in this application have a same meaning.

The ASR module is configured to convert the speech stream into a text (which may also be referred to as text information or text content).

The NLU module is configured to convert the text into an intent.

The ASR module and the NLU module do not limit parameters such as an expression format of the speech stream and a quantity of intents in the speech stream, and may recognize a plurality of intents in various speech streams. This helps extend a support range of recognizing a speech stream by the terminal device, and further helps improve complexity and a capability level of recognizing a speech stream by the terminal device.

The DM module is configured to convert the intent into an instruction.

The DM module works with the central control unit and the voice assistant app, so that the terminal device implements a one-sentence multi-instruction function in an asynchronous processing manner.

This application includes but is not limited to using the central control unit, the ASR module, the NLU module, and the DM module, and the foregoing modules may be replaced with modules with same functions.

Generally, the central control unit, the ASR module, the NLU module, and the DM module are disposed in a centralized manner to facilitate management and subsequent maintenance. For example, the foregoing modules are all disposed on a device side, and/or the foregoing modules are all disposed on a cloud side. Certainly, the foregoing modules may alternatively be disposed separately. For example, some modules are disposed on a device side, and remaining modules are disposed on a cloud side.

The centralized disposing is used as an example, and the foregoing modules are described in detail with reference to case 1, case 2, and case 3.

### Case 1

When the central control unit, the ASR module, the NLU module, and the DM module are disposed on a cloud side, the central control unit, the ASR module, the NLU module, and the DM module may be integrated into a same server, or may be separately and independently disposed in different servers, or may be combined and disposed in different servers.

The server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (content delivery network, CDN), and a big data and artificial intelligence platform.

The central control unit and the terminal device usually belong to a same vendor.

The ASR module and the terminal device may belong to a same vendor, or may belong to different vendors.

The NLU module and the terminal device may belong to a same vendor, or may belong to different vendors.

The DM module and the terminal device may belong to a same vendor, or may belong to different vendors.

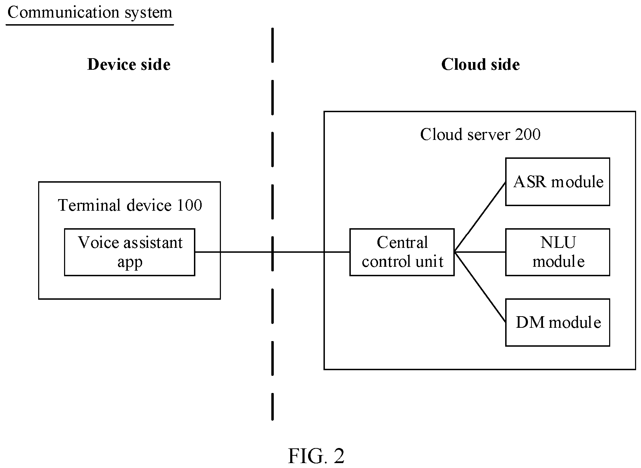

The following describes in detail the terminal device and the cloud server with reference to FIG. 2 by using an example in which the central control unit, the ASR module, the NLU module, and the DM module are all disposed in the cloud server.

FIG. 2 is a diagram of an architecture of a communication system according to an embodiment of this application. As shown in FIG. 2, the communication system may include a terminal device 100 on a device side and a cloud server 200 on a cloud side.

The terminal device 100 is loaded with a voice assistant app. The terminal device 100 is configured to: obtain, through the voice assistant app, a speech stream that is input by a user, and request, based on the speech stream, the cloud server 200 for an asynchronous processing service.

The cloud server 200 may include a central control unit, an ASR module, an NLU module, and a DM module. The cloud server 200 is configured to provide the asynchronous processing service for the terminal device 100 by using the central control unit, the ASR module, the NLU module, and the DM module.

In conclusion, the speech control method in this application may be jointly implemented by the terminal device and the cloud server shown in FIG. 2.

### Case 2

When the central control unit, the ASR module, the NLU module, and the DM module are disposed on a device side, the central control unit, the ASR module, the NLU module, and the DM module may be disposed in a terminal device.

The central control unit, the ASR module, the NLU module, and the DM module may be integrated into a same plug-in, or may be separately and independently disposed in different plug-ins, or may be combined and disposed in different plug-ins. The plug-in mentioned in this application may be understood as an app without a user interface.

The central control unit and the terminal device usually belong to a same vendor.

The ASR module and the terminal device may belong to a same vendor, or may belong to different vendors.

The NLU module and the terminal device may belong to a same vendor, or may belong to different vendors.

The DM module and the terminal device usually belong to a same vendor, so that the DM module and the voice assistant app can be strongly coupled. This helps the terminal device implement a one-sentence multi-instruction function.

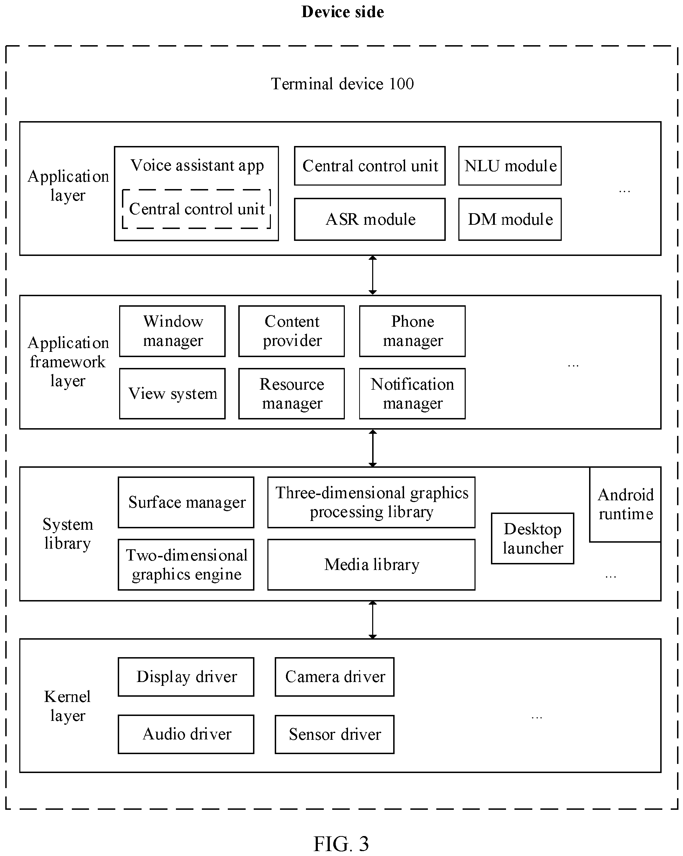

The following describes the terminal device in detail with reference to FIG. 3.

An operating system of the terminal device may use a layered architecture, an event-driven architecture, a microkernel architecture, a microservice architecture, or a cloud architecture. In this application, an Android system with a layered architecture is used as an example to describe a software structure of the terminal device. A type of the operating system of the terminal device is not limited in this application, for example, an Android system, a Linux system, a Windows system, an iOS system, or a Harmony operating system (harmony operating system, HarmonyOS).

FIG. 3 is a block diagram of a software structure of a terminal device according to an embodiment of this application. As shown in FIG. 3, in a layered architecture, software is divided into several layers, and each layer has a clear role and task. The layers communicate with each other through a software interface. In some embodiments, the Android system is divided into four layers, which are respectively an application layer (APP), an application framework layer (APP framework), an Android runtime (Android runtime) and system library (libraries), and a kernel layer (kernel) from top to bottom.

The application layer may include a series of application packages.

As shown in FIG. 3, the application packages may include a voice assistant app, a central control unit, an ASR module, an NLU module, and a DM module.

For specific implementations of the voice assistant app, the central control unit, the ASR module, the NLU module, and the DM module, refer to the foregoing descriptions. Details are not described herein again.

The central control unit may be integrated into the voice assistant app, or may be independently disposed at the application layer.

In addition, the application packages may further include applications such as a desktop, Camera, Gallery, Calendar, Phone, Map, Navigation, WLAN, Bluetooth, Music, Video, Game, chatting, shopping, travel, instant messaging (such as Messages), smart home, and device control.

In addition, the application packages may further include applications such as a desktop (that is, a home screen), a leftmost screen, a control center, and a notification center.

The application framework layer provides an application programming interface (application programming interface, API) and a programming framework for applications at the application layer. The application framework layer includes some predefined functions.

As shown in FIG. 3, the application framework layer may include a window manager, a content provider, a view system, a phone manager, a resource manager, a notification manager, and the like.

The window manager (window manager) is configured to manage window programs, such as window status and attribute management, view (view) addition, deletion, and update, a window sequence, and message collection and processing. The window manager may obtain a display size, determine whether there is a status bar, lock a screen, take a screenshot, and the like. In addition, the window manager is an entry for accessing a window externally.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function for the terminal device 100, for example, call status management (including accepting and declining).

The resource manager (resource manager) provides various resources for an application, such as a localized character string, an icon, a picture, a user interface layout file (layout xml), a video file, a font, a color, and an identity number (identity document, ID) (which may also be referred to as a serial number or an account) of a user interface component (user interface module, UI component). In addition, the resource manager is configured to uniformly manage the foregoing resources.

The notification manager (notification manager) enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the terminal device 100 vibrates, and an indicator flickers.

The Android runtime includes a kernel library and a virtual machine. The Android runtime is responsible for scheduling and managing the Android system.

The kernel library includes two parts: a function that needs to be invoked by using the Java language, and a kernel library of the Android system.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (media libraries), a three-dimensional graphics processing library (for example, OpenGL ES), a 2D graphics engine (for example, SGL), an image processing library, and a desktop launcher (launcher).

The surface manager is configured to manage a display subsystem and provide fusion of 2D and 3D layers for a plurality of applications.

The media library supports playback and recording in a plurality of commonly used audio and video formats, and static image files. The media library can support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the terminal device 100 with reference to a scenario in which a smart speaker is used to play a sound.

When a touch sensor receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a control of a smart speaker icon. A smart speaker application invokes an interface of the application framework layer to start the smart speaker application, so as to start an audio driver by invoking the kernel layer, to convert an audio electrical signal into a sound signal by using the speaker.

In conclusion, the speech control method in this application may be implemented by using the terminal device shown in FIG. 3.

Based on the descriptions of case 1 and case 2, with reference to the terminal device and the cloud server shown in FIG. 2 or the terminal device shown in FIG. 3, the speech control method provided in this application is described in detail by using solution 1, solution 2, and variant solution 2. Solution 1

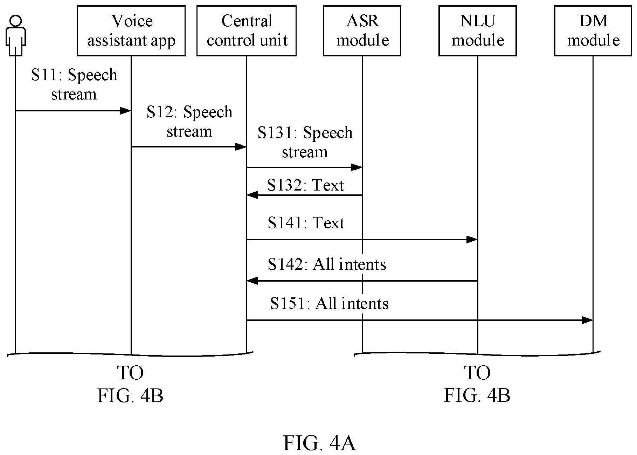

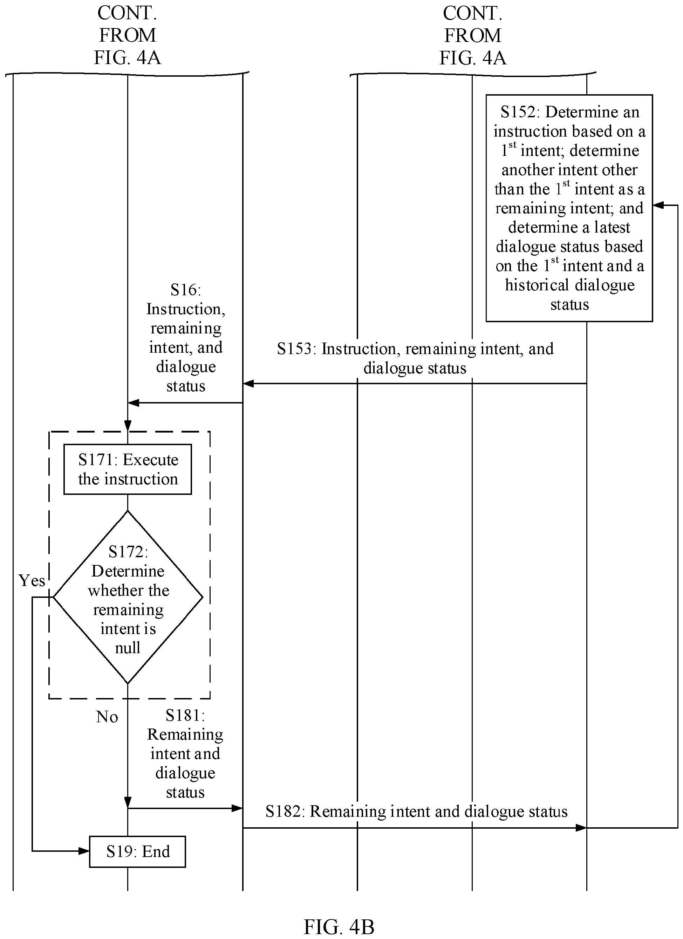

FIG. 4A and FIG. 4B are a signaling flowchart of a speech control method according to an embodiment of this application. As shown in FIG. 4A and FIG. 4B, the speech control method in this application may include the following steps.

S11: A voice assistant app obtains a speech stream that is input by a user.

The speech stream represents a plurality of intents delivered by the user to a terminal device at a time/at a breath. For example, the speech stream may include the plurality of intents. In addition, the speech stream may be further used to wake up the voice assistant app. For example, the speech stream may include a keyword (for example, "Hey Celia") for waking up the voice assistant app and the plurality of intents.

It should be noted that the plurality of intents delivered by the user to the terminal device at a time/at a breath may be understood as follows: After waking up the voice assistant app each time, the user may deliver a plurality of intents in a speech stream to the terminal device by inputting the speech stream.

For example, after the voice assistant app is woken up for the first time, the voice assistant app may obtain a speech stream that is input by the user. If the voice assistant app is closed in this case, and the voice assistant app is woken up again after being closed, a speech stream that is input by the user and that is obtained by the voice assistant app in this case cannot be considered as the speech stream that is input by the user when the voice assistant app is woken up for the first time, but a speech stream that is input by the user when the voice assistant app is woken up again.

In addition, parameters such as a format, content, and a quantity of intents of the speech stream are not limited in this application. In this way, the speech stream that is input by the user is more generalized.

S12: The voice assistant app sends the speech stream to a central control unit.

The voice assistant app sends the speech stream to the central control unit and requests an asynchronous processing service from the central control unit.

Therefore, the central control unit may separately invoke an ASR module, an NLU module, and a DM module, to transmit, by using corresponding functions of the modules, instructions corresponding to the plurality of intents in the speech stream to the voice assistant app one by one. S131: The central control unit invokes the ASR module, and sends the speech stream to the ASR module.

S132: The ASR module converts the speech stream into a text, and sends the text to the central control unit.

S141: The central control unit invokes the NLU module, and sends the text to the NLU module. S142: The NLU module converts the text into all intents, and sends all the intents to the central control unit.

The NLU module may recognize the text in a manner such as a rule module, a neural network, or a statistical algorithm, to obtain all the intents, and an arrangement sequence of all the intents is consistent with a delivery sequence of all the intents in the speech stream.

All the intents may be understood as all intents included in the speech stream. A quantity of all the intents is greater than or equal to 2. The arrangement sequence of all the intents may be understood as a sequence of arranging each intent in all the intents. The delivery sequence of all the intents in the speech stream may be understood as a sequence in which each intent in all the intents occurs in the speech stream. In addition, the arrangement sequence of all the intents is further related to internal logic between all the intents. In addition, one intent may correspond to one or more instructions.

For example, it is assumed that the speech stream that is input by the user is "increase the temperature of the air conditioner and open the window".

In this case, the speech stream may include intent 1: "increase the temperature of the air conditioner"; and intent 2: "open the window". Intent 1 is arranged in a 1^{st} place, and intent 2 is arranged in a last place.

Alternatively, "increase the temperature of the air conditioner" can be performed only after "turn on the air conditioner". Therefore, the speech stream may include intent 1: "turn on the air conditioner"; intent 2: "increase the temperature of the air conditioner"; and intent 3: "open the window". Intent 1 is arranged in a 1^{st} place, intent 2 is arranged in the middle, and intent 3 is arranged in a last place.

In addition, all the intents may belong to a same category or different categories.

For example, if all the intents include intent 1 "order takeout", intent 2 "order a ticket", and intent 3 "order an air ticket", intent 1, intent 2, and intent 3 are all search intents.

It can be learned that intent 1, intent 2, and intent 3 belong to a same category.

For another example, if all the intents include intent 1 "query the weather", intent 2 "order takeout", and intent 3 "open the window", intent 1 is a query intent, intent 2 is a search intent, and intent 3 is an operation intent.

It can be learned that intent 1, intent 2, and intent 3 belong to different categories.

S151: The central control unit invokes the DM module, and sends all the intents to the DM module, where the arrangement sequence of all the intents is consistent with the delivery sequence of all the intents in the speech stream.

S152: The DM module determines an instruction based on a 1^{st} intent; determines another intent other than the 1^{st} intent as a remaining intent; and generates a latest dialogue status based on the 1^{st} intent and a historical dialogue status.

In an entire process in which the terminal device implements a one-sentence multi-instruction function based on the speech stream in S11, the central control unit transmits intents to the DM module a plurality of times, a quantity of intents transmitted each time decreases by 1 gradually, and an arrangement sequence of the intents transmitted each time is consistent with the delivery sequence of all the intents in the speech stream.

Based on the foregoing description, the DM module may determine, in the intents received by the DM module from the central control unit, an intent arranged in a 1^{st} place as the 1^{st} intent in S152. In other words, the 1^{st} intent in S152 may be understood as one of all the intents, and the one of the intents is obtained by traversing each of all the intents in the delivery sequence of all the intents in the speech stream from the 1^{st} intent in all the intents.

When the DM module receives an intent from the central control unit for the first time, the intent received by the DM module from the central control unit is all the intents, and the DM module may obtain the 1^{st} intent in all the intents from all the intents.

When the DM module receives an intent from the central control unit for a non-first time, the intent received by the DM module from the central control unit is a remaining intent, and the DM module may obtain the 1^{st} intent in the remaining intent from the remaining intent.

Therefore, after obtaining the 1^{st} intent, the DM module may perform the following steps.

Step a1: The DM module may determine, based on the 1^{st} intent and the historical dialogue status, the instruction corresponding to the 1^{st} intent. Parameters such as a quantity and a type of instructions are not limited in this application. For example, the instruction corresponding to the 1^{st} intent may include a broadcast instruction and/or a card instruction.

Step a2: The DM module may determine the another intent other than the 1^{st} intent as the remaining intent, where an arrangement sequence of the remaining intent is consistent with the delivery sequence of all the intents in the speech stream.

The DM module may determine, in the intents received by the DM module from the central control unit, the another intent other than the 1^{st} intent as the remaining intent.

In addition, the arrangement sequence of the remaining intent and an arrangement sequence of the intents received by the DM module from the central control unit are consistent with the delivery sequence of all the intents in the speech stream, so that the voice assistant app can execute, one by one in the arrangement sequence of all the intents, the instruction corresponding to each intent in all the intents.

When the DM module receives an intent from the central control unit for the first time, the intent received by the DM module from the central control unit is all the intents, the DM module may determine another intent other than the 1^{st} intent in all the intents as a remaining intent, and an arrangement sequence of the remaining intent is the same as the arrangement sequence of all the intents.

When the DM module receives an intent from the central control unit for a non-first time, the intent received by the DM module from the central control unit is a remaining intent, the DM module may determine another intent other than the 1^{st} intent in the remaining intent as a new remaining intent, and an arrangement sequence of the new remaining intent is the same as the arrangement sequence of all the intents.

It should be noted that, if the intent received by the DM module from the central control unit includes only the 1^{st} intent, there is no intent other than the 1^{st} intent. Therefore, in this case, the DM module may set the remaining intent to null.

For example, all the intents include intent 1, intent 2, and intent 3 that are arranged in an arrangement sequence.

When the DM module receives an intent from the central control unit for the first time, the intent received by the DM module from the central control unit includes intent 1, intent 2, and intent 3. In this case, the DM module determines that the 1^{st} intent is intent 1, and the DM module may further determine that the remaining intent includes intent 2 and intent 3. When the DM module receives an intent from the central control unit for the second time, the intent received by the DM module from the central control unit includes intent 2 and intent 3. In this case, the DM module may determine that the 1^{st} intent is intent 2, and the DM module may further determine that the remaining intent includes intent 3. When the DM module receives an intent from the central control unit for the third time, the intent received by the DM module from the central control unit includes intent 3. In this case, the DM module may determine that the 1^{st} intent is intent 3, and the DM module may further determine that the remaining intent is null.

Step a3: The DM module may update the historical dialogue status based on the 1^{st} intent, to generate the latest dialogue status.

The dialogue status may be understood as slot information corresponding to an intent. Updating the dialogue status may be understood as a process of filling a slot.

It should be understood that each intent corresponds to one or more slots, and specific content of any slot is slot information (which may also be referred to as a slot value). The slot information may be a default value, or may be obtained through update based on an intent converted from the speech stream.

For example, for an intent of "turn on the air conditioner", corresponding slots may include a model of the air conditioner, a switch status of the air conditioner, a temperature of the air conditioner, a mode of the air conditioner, and the like. Slot information corresponding to the slots may include: The model of the air conditioner is "XXXA", the switch status of the air conditioner is "on", the temperature of the air conditioner is "26°C", the mode of the air conditioner is "refrigeration mode", and the like.

Therefore, the DM module may obtain the historical dialogue status. In addition, the DM module fills all slots corresponding to all intents based on slot information corresponding to the 1^{st} intent, to update the historical dialogue status. In this way, the DM module can obtain the latest dialogue status.

For the current 1^{st} intent, the historical dialogue status is all slot information corresponding to all the intents before the instruction corresponding to the 1^{st} intent is executed. The latest dialogue status is slot information corresponding to all the intents after the instruction corresponding to the 1^{st} intent is executed.

In addition, an initial status of the dialogue status is all slot information corresponding to all the intents before an instruction corresponding to any one of all the intents is executed.

It should be noted that the latest dialogue status corresponding to the current 1^{st} intent may be considered as a historical dialogue status corresponding to a next intent that is arranged after the 1^{st} intent.

In addition, there is no specific time sequence between step a1, step a2, and step a3, and step a1, step a2, and step a3 may be performed in parallel or in sequence.

S153: The DM module sends the instruction, the remaining intent, and the dialogue status to the central control unit.

S16: The central control unit sends the instruction, the remaining intent, and the dialogue status to the voice assistant app.

In this way, the voice assistant app may asynchronously perform S171 and S172.

S171: The voice assistant app executes the instruction.

S172: The voice assistant app determines whether the remaining intent is null.

In S153, S16, S171, and S172, the instruction is the instruction corresponding to the 1^{st} intent in S152. The remaining intent is the remaining intent obtained through update in S152. The dialogue status is the latest dialogue status in S152.

If the foregoing is true, the voice assistant app may determine that the instruction corresponding to each intent in all the intents is executed, and may stop requesting the asynchronous processing service from the central control unit. Therefore, the voice assistant app may perform S19.

If the foregoing is false, the voice assistant app may determine that an instruction corresponding to an intent in all the intents is still not executed, and may continue to request the asynchronous processing service from the central control unit. Therefore, the voice assistant app may perform S181.

In conclusion, when executing the instruction corresponding to the 1^{st} intent, the voice assistant app may further determine whether to continue to request the asynchronous processing service from the central control unit, so that the voice assistant app can execute, one by one, instructions corresponding to all the intents in the speech stream.

It should be noted that there is no specific time sequence between S171 and S172. S171 and S172 may be simultaneously performed, or may be performed in sequence.

S181: The voice assistant app sends the remaining intent and the dialogue status to the central control unit.

Therefore, through transmission of the remaining intent, the central control unit does not need to invoke the ASR module and the NLU module again to convert the speech stream into an intent. This shortens a processing response delay. In addition, through transmission of the dialogue status, it is ensured that the DM module can accurately convert the intent into an instruction.

S182: The central control unit invokes the DM module, and sends the remaining intent and the dialogue status to the DM module. Therefore, the DM module continues to perform S152.

The intent received by the DM module from the central control unit is the remaining intent. Therefore, the DM module may obtain the 1^{st} intent in the remaining intent from the remaining intent. Then, after obtaining the 1^{st} intent, the DM module may separately perform step a1, step a2, and step a3 in S152.

In this way, in an embodiment of S172, when it is determined that the remaining intent is not null, after S181, S182, S152, S153, and S16 are performed, S171 and S172 may be performed again, so that an instruction corresponding to the 1^{st} intent in the remaining intent is executed, and whether a new remaining intent is null may continue to be determined. Therefore, when it is determined that the remaining intent is not null, the foregoing process may be repeated until it is determined that a new remaining intent is null. Then, the foregoing process may be stopped, that is, S19 is performed.

Therefore, the voice assistant app may request the DM module to send, one by one through the central control unit, the instruction corresponding to each intent to the voice assistant app in the delivery sequence of all the intents in the speech stream, so that the voice assistant app executes, one by one in the delivery sequence of all the intents in the speech stream, the instruction corresponding to each intent in all the intents.

S19: The voice assistant app ends performing S171 and S172.

In conclusion, after the ASR module and the NLU module determine all the intents in the speech stream, the DM module may return, to the voice assistant app a plurality of times, the instruction corresponding to the 1^{st} intent, the remaining intent, and the latest dialogue status. The voice assistant app may execute the instruction corresponding to the 1^{st} intent, and asynchronously request the DM module to continue to return, to the voice assistant app based on the remaining intent and the latest dialogue status, an instruction corresponding to a new 1^{st} intent, a new remaining intent, and a latest dialogue status, until execution of the instruction corresponding to each intent in all the intents ends.

### Solution 2

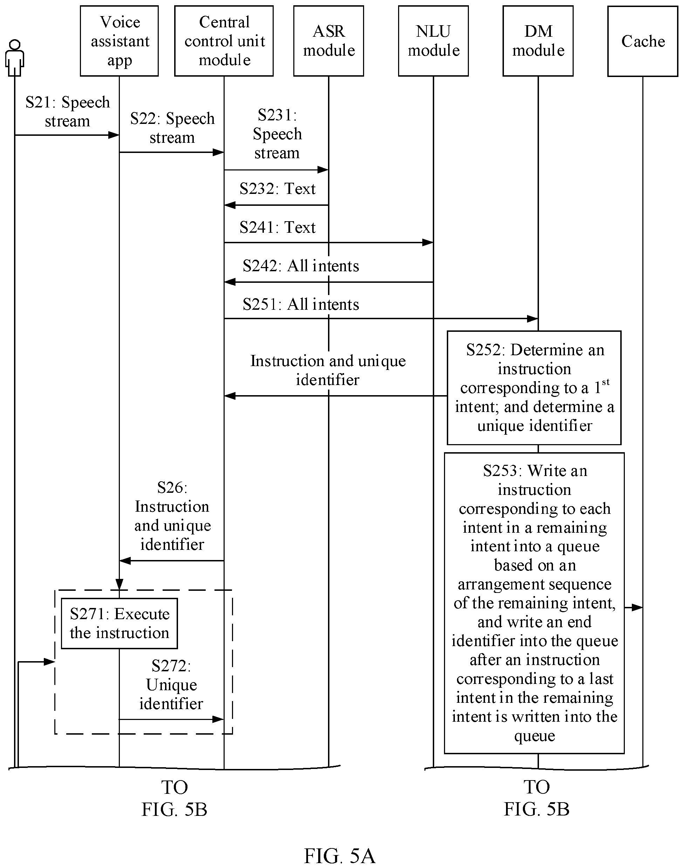

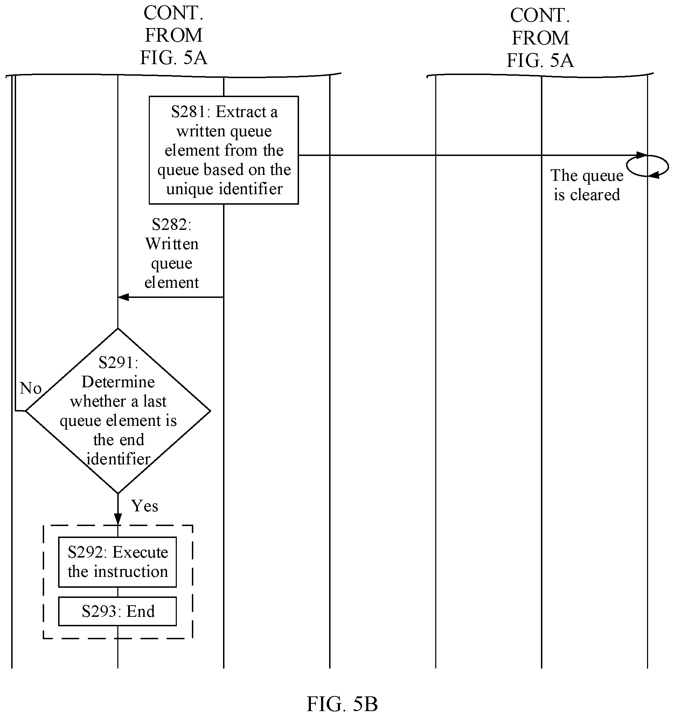

FIG. 5A and FIG. 5B are a signaling flowchart of a speech control method according to an embodiment of this application. As shown in FIG. 5A and FIG. 5B, the speech control method in this application may include the following steps.

S21: A voice assistant app obtains a speech stream of a user.

S22: The voice assistant app sends the speech stream to a central control unit.

S231: The central control unit invokes an ASR module, and sends the speech stream to the ASR module.

S232: The ASR module converts the speech stream into a text, and sends the text to the central control unit.

S241: The central control unit invokes an NLU module, and sends the text to the NLU module. S242: The NLU module converts the text into all intents, and sends all the intents to the central control unit.

S251: The central control unit invokes a DM module, and sends all the intents to the DM module. S21, S22, S231, S232, S241, S242, and S251 are respectively similar to implementations of S11, S12, S131, S132, S141, S142, and S151 in the embodiment in FIG. 4A and FIG. 4B, and details are not described herein again.

S252: The DM module determines an instruction corresponding to a 1^{st} intent, determines a unique identifier, and sends the instruction and the unique identifier to the central control unit.

The DM module may obtain the 1^{st} intent in all the intents from all the intents. Therefore, after obtaining the 1^{st} intent in all the intents, the DM module may perform the following steps.

Step b1: The DM module may determine, based on a historical dialogue status, the instruction corresponding to the 1^{st} intent. Parameters such as a quantity and a type of instructions are not limited in this application. For example, the instruction corresponding to the 1^{st} intent may include a broadcast instruction and/or a card instruction.

Step b2: The DM module may determine the unique identifier.

The unique identifier may be an identifier negotiated in advance by the DM module and the voice assistant app for a user, a dialogue initiated by the user by using the voice assistant app, a terminal device, or the like, or may be an identifier newly generated by the DM module based on a factor such as a user, a dialogue initiated by the user by using the voice assistant app, or a terminal device. The unique identifier uniquely indicates the terminal device, the user, the dialogue initiated by the user, and a queue used to store an instruction corresponding to each intent. In other words, a unique terminal device, a unique user, a unique dialogue initiated by the user by using the terminal device, and a unique queue used to store an instruction corresponding to an intent in a speech stream input by the user in the dialogue may be determined by using the unique identifier.

In addition to the foregoing description, the unique identifier further indicates, to the voice assistant app after the voice assistant app receives the unique identifier, that an asynchronous processing service process is still ongoing currently, that is, an instruction corresponding to an intent may still not be executed, so that the voice assistant app may request the central control unit to extract the instruction corresponding to the intent from the queue.

The unique identifier may be represented in a manner such as a letter, a number, a binary number, or an array. In some embodiments, the unique identifier may be an identity (identity document, ID, for example, a device number or a device model) of the terminal device, a unique ID of the user (for example, an account used by the user to log in to the voice assistant app, a user name, or a mobile number), a unique ID of the dialogue (for example, a number or a name), a unique ID of the queue (for example, a number, a storage address, or a location of a storage module), or the like. It should be noted that there is no specific time sequence between step b1 and step b2, and step b1 and step b2 may be performed in parallel or in sequence.

Step b3: The DM module may send the instruction and the unique identifier to the central control unit.

After the DM module performs step b1, the instruction herein is the instruction corresponding to the 1^{st} intent in S252.

S253: The DM module writes an instruction corresponding to each intent in a remaining intent into a queue in an arrangement sequence of the remaining intent, and writes an end identifier into the queue after an instruction corresponding to a last intent in the remaining intent is written into the queue.

After step b2, the DM module may perform S253, and asynchronously perform step b3.

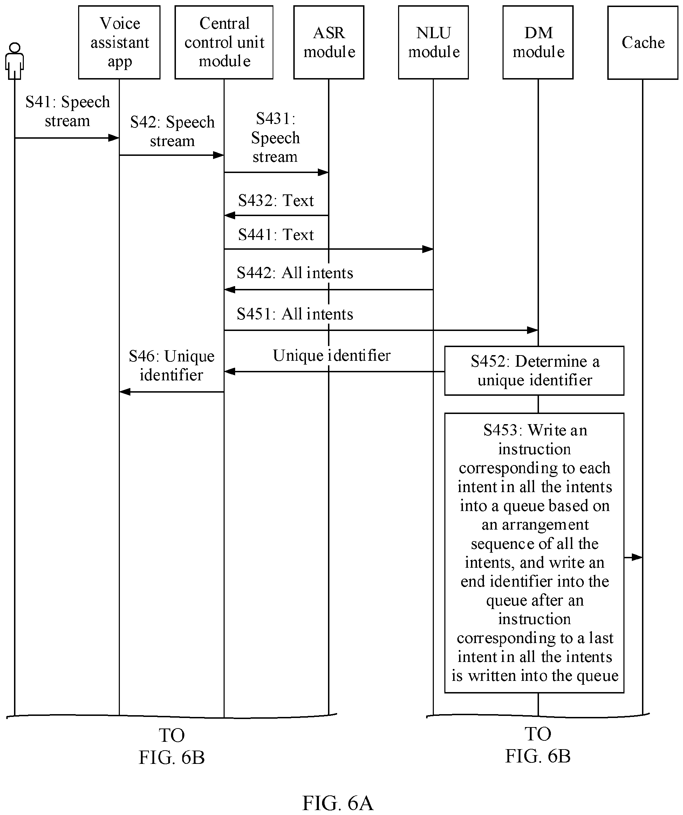

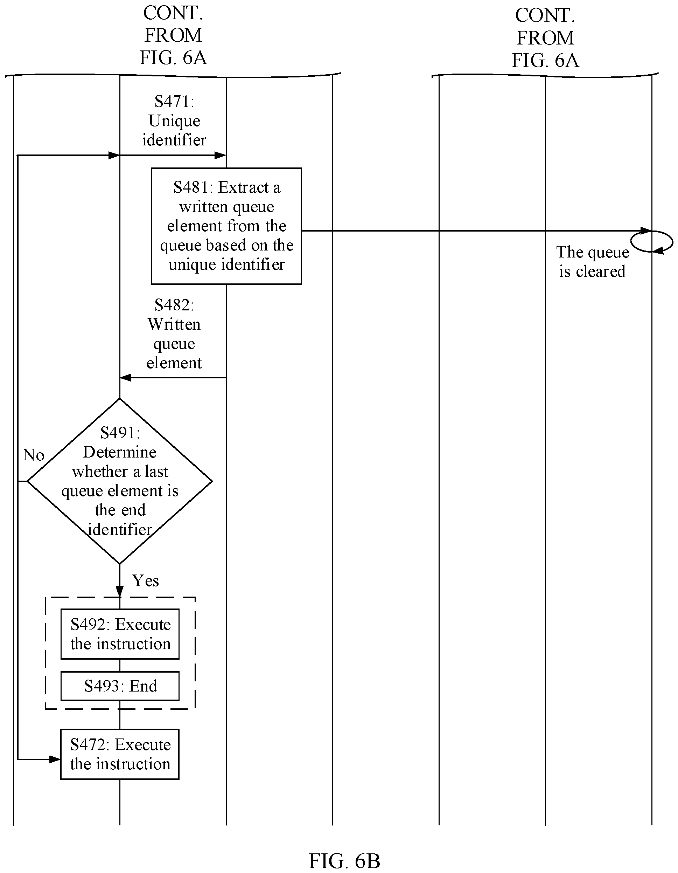

Based on the description in step b2, the queue uniquely corresponds to the unique identifier. In addition, the queue may be stored in a storage module. The storage module may be disposed on a cloud side. Various types such as a cache (Cache) may be used for the storage module. For ease of description, in FIG. 5A and FIG. 5B and FIG. 6A and FIG. 6B, a cache is used as an example of the storage module.

The end identifier may be an identifier negotiated in advance by the DM module and the voice assistant app for a user, a dialogue initiated by the user by using the voice assistant app, a terminal device, or the like, or may be an identifier newly generated by the DM module based on a factor such as a user, a dialogue initiated by the user by using the voice assistant app, or a terminal device. The end identifier indicates whether the instruction corresponding to each intent in the remaining intent is enqueued, and further indicates whether an instruction corresponding to each intent stored in the queue is dequeued. The end identifier may be represented in a manner such as a letter, a number, a binary number, or an array. Therefore, after receiving the end identifier, the voice assistant app may stop requesting an asynchronous processing service.

After step b1, the DM module may determine an intent other than the 1^{st} intent in all the intents as the remaining intent, and the arrangement sequence of the remaining intent is consistent with a delivery sequence of all the intents in the speech stream, that is, the arrangement sequence of the remaining intent is the same as an arrangement sequence of all the intents.

When the queue is a first in first out (first in first out, FIFO) queue, for the remaining intent, the DM module may write, in a plurality of implementations based on the arrangement sequence of the remaining intent, an instruction corresponding to each intent into the FIFO queue.

In some embodiments, based on the arrangement sequence of the remaining intent, each time an instruction corresponding to an intent is determined, the DM module may write the instruction corresponding to the intent into the FIFO queue as a queue element.

In some other embodiments, the DM module may determine the instruction corresponding to each intent in the remaining intent. After the instruction corresponding to each intent is determined, the DM module may sequentially write, based on the arrangement sequence of the remaining intent, the instruction corresponding to each intent into the FIFO queue as a queue element.

Therefore, in the FIFO queue, the instruction corresponding to each intent is stored based on the arrangement sequence of the remaining intent.

Duration of generating the instruction corresponding to each intent is long or short. Therefore, after the instruction corresponding to the last intent in the remaining intent is written into the FIFO queue, the DM module may write the end identifier into the FIFO queue as a queue element, to not only indicate whether the instruction corresponding to each intent is enqueued, but also facilitate subsequent indication of whether instructions corresponding to all intents stored in the FIFO queue are dequeued.

Therefore, the instruction corresponding to each intent in the remaining intent and the end identifier are stored in the FIFO queue as queue elements.

In the FIFO queue, a 1^{st} queue element to which a queue head points is an instruction corresponding to a 1^{st} intent in the remaining intent, and a last queue element to which a queue tail points is the end identifier.

It should be noted that, in addition to the foregoing implementation, when the queue is a last in first out (last in first out, LIFO) queue, the DM module may first write the end identifier into the LIFO queue as a queue element, and then may sequentially write, in a sequence opposite to the arrangement sequence of the remaining intent, the instruction corresponding to each intent in the remaining intent into the LIFO queue as a queue element.

Therefore, the instruction corresponding to each intent in the remaining intent and the end identifier are stored in the LIFO queue as queue elements.

In the LIFO queue, a 1^{st} queue element to which a queue head points is an instruction corresponding to a 1^{st} intent in the remaining intent, and a last queue element to which a queue tail points is the end identifier.

It can be learned that a write sequence of queue elements in the FIFO queue is opposite to a write sequence of queue elements in the LIFO queue. Therefore, an arrangement sequence of the queue elements in the FIFO queue is the same as an arrangement sequence of the queue elements in the LIFO queue.

In conclusion, the DM module writes the instruction corresponding to each intent in the remaining intent into the queue as a queue element in the arrangement sequence of the remaining intent, and writes the end identifier into the queue as a queue element after the instruction corresponding to the last intent in the remaining intent is written into the queue.

An arrangement sequence of queue elements in the queue is the same as the arrangement sequence of the remaining intent.

Therefore, the instruction corresponding to each intent in the remaining intent is stored in the queue based on the arrangement sequence of the remaining intent, and the central control unit does not need to invoke the ASR module and the NLU module again to convert the speech stream into an intent, thereby shortening a processing response delay. In addition, the unique identifier is transmitted, to ensure that the voice assistant app can execute, one by one from the queue, the instruction corresponding to each intent in the remaining intent.

It should be noted that, in addition to the queue, the DM module may further store, in a manner such as a table, a set, or an array that uniquely corresponds to the unique identifier, the instruction corresponding to each intent in the remaining intent.

S26: The central control unit sends the instruction and the unique identifier to the voice assistant app.

After the central control unit receives the instruction corresponding to the 1^{st} intent from the DM module, the instruction herein is the instruction corresponding to the 1^{st} intent in S252.

It should be noted that, after step b3, the central control unit may perform S26.

Therefore, the voice assistant app may asynchronously perform S271 and S272.

S271: The voice assistant app executes the instruction.

After the voice assistant app receives the instruction corresponding to the 1^{st} intent from the central control unit, the instruction herein is the instruction corresponding to the 1^{st} intent in S252. S272: The voice assistant app sends the unique identifier to the central control unit.

In conclusion, when executing the instruction corresponding to the 1^{st} intent, the voice assistant app may further determine whether to continue to request the asynchronous processing service from the central control unit, so that the voice assistant app can execute, one by one, instructions corresponding to all the intents in the speech stream.

It should be noted that there is no specific time sequence between S271 and S272. S271 and S272 may be simultaneously performed, or may be performed in sequence.

S281: The central control unit extracts, from the queue based on the unique identifier, a written queue element arranged in sequence.

The central control unit may determine the queue uniquely corresponding to the unique identifier. Then, the central control unit may extract, from the queue, the written queue element arranged in sequence. In this way, an arrangement sequence of instructions corresponding to all intents in the extracted queue element is consistent with a delivery sequence of all the intents in the speech stream, and it is ensured that the voice assistant app can sequentially execute the instructions corresponding to all the intents in the extracted queue element.

A quantity of queue elements extracted by the central control unit from the queue is not limited in this application.

In some embodiments, a quantity of queue elements in the queue is equal to the quantity of queue elements extracted by the central control unit from the queue. In this way, the queue is cleared, and a request amount of the voice assistant app is reduced, thereby helping reduce a processing response delay. For ease of description, the foregoing manner is used in FIG. 5A and FIG. 5B for illustration.

In some other embodiments, the central control unit may alternatively extract a fixed quantity of queue elements from the queue. Therefore, a processing rate of the terminal device is also considered. A specific value of the fixed quantity is not limited in this application. For example, the fixed quantity is 1.

In addition, because duration in which the DM module determines the instruction corresponding to each intent is long or short, a case in which no queue element exists in the queue may occur. In this case, if the central control unit extracts a queue element from the queue, the queue element extracted by the central control unit is null. Therefore, in the foregoing case, the central control unit may wait for a period of time until a queue element exists in the queue, and then the central control unit extracts, from the queue, the written queue element arranged in sequence.

It should be noted that, if the DM module stores, in a set, the instruction corresponding to each intent in the remaining intent, the central control unit may obtain, from the set, written data that is arranged in sequence, and delete the written data that is arranged in sequence from the set, to obtain an updated set, so that the central control unit cyclically performs the foregoing process. Alternatively, the central control unit may obtain, from the set, the written data that is arranged in sequence, and record a storage location of a last piece of data in the written data that is arranged in sequence, so that the central control unit subsequently obtains, from the set, written data that is located after the storage location and arranged in sequence.

S282: The central control unit sends the written queue element arranged in sequence to the voice assistant app.

An arrangement sequence of the written queue element is consistent with an arrangement sequence of the queue elements in the queue.

S291: The voice assistant app determines whether a last queue element in the written queue element is the end identifier.

If the last queue element in the written queue element is the end identifier, the voice assistant app may determine that the instruction corresponding to each intent in the remaining intent has been received, and may stop requesting the asynchronous processing service from the central control unit. Therefore, the voice assistant app may perform S292 and S293, or perform S293.

If the last queue element in the written queue element is not the end identifier, the voice assistant app may determine that not all instructions corresponding to all intents in the remaining intent are obtained, and may continue to request the asynchronous processing service from the central control unit. Therefore, the voice assistant app may continue to asynchronously perform S271 and S272. After the voice assistant app receives the written queue element in S282 from the central control unit, the voice assistant app may continue to asynchronously perform a specific process of S271 and S272, including the following.

If a quantity of written queue elements is 1, the instruction in S271 is an instruction corresponding to an intent corresponding to the queue element in S282. Therefore, the voice assistant app may execute the instruction corresponding to the intent corresponding to the queue element, and asynchronously send the unique identifier to the central control unit.

If a quantity of written queue elements is greater than 1, the instruction in S271 is an instruction corresponding to each intent corresponding to the written queue elements in S282. Therefore, the voice assistant app may execute, based on an arrangement sequence of the queue elements in the queue, an instruction corresponding to an intent corresponding to each queue element, and asynchronously send the unique identifier to the central control unit. It should be noted that, in addition to the determining manner in the embodiment of S291, the voice assistant may further determine, one by one based on the arrangement sequence of the queue elements in the queue, whether each queue element is the end identifier and the last queue element.

When the queue element is not the end identifier and is not the last element, the voice assistant may execute an instruction corresponding to an intent corresponding to the queue element, and continue to determine whether a next queue element is the end identifier and the last queue element. When the queue element is not the end identifier and is the last element, the voice assistant may execute an instruction corresponding to an intent corresponding to the queue element, and asynchronously send the unique identifier to the central control unit.

When the queue element is the end identifier and is the last element, the voice assistant may end execution of an instruction corresponding to an intent corresponding to the queue element, and no longer asynchronously send the unique identifier to the central control unit.

S292: The voice assistant app executes the instruction.

S293: The voice assistant app ends performing S272.

After the voice assistant app receives the written queue element in S282 from the central control unit, the voice assistant app may perform a specific process of S292 and S293 or S293, including the following.

If the quantity of written queue elements is 1, the written queue element includes the end identifier. Therefore, if the voice assistant app does not receive an instruction corresponding to an intent, the voice assistant app may send the unique identifier to the central control unit.

If the quantity of written queue elements is greater than 1, the written queue elements include an instruction corresponding to an intent and the end identifier. Therefore, the instruction in S292 is an instruction corresponding to an intent corresponding to each queue element other than the last queue element in the written queue elements in S282. The voice assistant app may execute, based on the arrangement sequence of the queue elements in the queue, the instruction corresponding to the intent corresponding to each queue element other than the last queue element in the written queue elements, and no longer asynchronously send the unique identifier to the central control unit. In this way, when it is determined that the last queue element in the written queue elements is not the end identifier, after S271 and S272, S281, and S282 are performed, S291 may be performed again, so that an instruction corresponding to one or more intents in the remaining intent is executed. Whether a last queue element in a new written queue element is not the end identifier may continue to be determined, so that when it is determined that the last queue element is not the end identifier, the foregoing process may be repeated until it is determined that a last queue element in a written queue element is the end identifier, and then after an instruction corresponding to an intent corresponding to each queue element other than the last queue element in the written queue element is sequentially executed, sending of the unique identifier to the central control unit may be stopped.

Therefore, after executing the instruction corresponding to the 1^{st} intent in all the intents, the voice assistant app may obtain, one by one through the central control unit based on the delivery sequence of all the intents in the speech stream, the instruction corresponding to each intent in the remaining intent from the queue corresponding to the unique identifier, so that the voice assistant app executes, one by one in the delivery sequence of all the intents in the speech stream, the instruction corresponding to each intent in all the intents.

In conclusion, after the ASR module and the NLU module determine all the intents in the speech stream, the DM module may return the instruction corresponding to the 1^{st} intent and the unique identifier to the voice assistant app, and asynchronously write, in the delivery sequence of all the intents in the speech stream, the instruction corresponding to each intent in the remaining intent into the queue corresponding to the unique identifier. The voice assistant app may execute the instruction corresponding to the 1^{st} intent, and asynchronously request the central control unit to continue to return, to the voice assistant app, an instruction corresponding to each intent that has been written into the queue corresponding to the unique identifier, until execution of the instruction corresponding to each intent in the remaining intent ends.

Variant solution 2

FIG. 6A and FIG. 6B are a signaling flowchart of a speech control method according to an embodiment of this application. As shown in FIG. 6A and FIG. 6B, the speech control method in this application may include the following steps.

S41: A voice assistant app obtains a speech stream of a user.

S42: The voice assistant app sends the speech stream to a central control unit.

S431: The central control unit invokes an ASR module, and sends the speech stream to the ASR module.

S432: The ASR module converts the speech stream into a text, and sends the text to the central control unit.

S441: The central control unit invokes an NLU module, and sends the text to the NLU module. S442: The NLU module converts the text into all intents, and sends all the intents to the central control unit.

S451: The central control unit invokes a DM module, and sends all the intents to the DM module. S41, S42, S431, S432, S441, S442, and S451 are respectively similar to implementations of S11, S12, S131, S132, S141, S142, and S151 in the embodiment in FIG. 4A and FIG. 4B, and details are not described herein again.

S452: The DM module determines a unique identifier, and sends the unique identifier to the central control unit.

An implementation of S452 is similar to that of step b2 in the embodiment in FIG. 5A and FIG. 5B, and details are not described herein again.

S453: The DM module writes an instruction corresponding to each intent in all the intents into a queue in an arrangement sequence of all the intents, and writes an end identifier into the queue after an instruction corresponding to a last intent in all the intents is written into the queue.

An implementation of S453 is similar to the implementation that is mentioned in S253 in the embodiment in FIG. 5A and FIG. 5B and in which the DM module writes the instruction corresponding to each intent in the remaining intent into the queue in the arrangement sequence of the remaining intent, and writes the end identifier into the queue after the instruction corresponding to the last intent in the remaining intent is written into the queue. Details are not described herein again.

Therefore, the instruction corresponding to each intent in all the intents is stored in the queue based on the arrangement sequence of all the intents, and the central control unit does not need to invoke the ASR module and the NLU module again to convert the speech stream into an intent, thereby shortening a processing response delay. In addition, the unique identifier is transmitted, to ensure that the voice assistant app can execute, one by one from the queue, the instruction corresponding to each intent in all the intents.

S46: The central control unit sends the unique identifier to the voice assistant app.

It should be noted that, after receiving the unique identifier through S452, the central control unit may perform S46.

S471: The voice assistant app sends the unique identifier to the central control unit.

S481: The central control unit extracts, from the queue based on the unique identifier, a written queue element arranged in sequence.

S482: The central control unit sends the written queue element arranged in sequence to the voice assistant app.

Implementations of S471, S481, and S482 are respectively similar to those of S272, S281, and S282 in the embodiment in FIG. 5A and FIG. 5B, and details are not described herein again. S491: The voice assistant app determines whether a last queue element in the written queue element is the end identifier.

If the last queue element in the written queue element is the end identifier, the voice assistant app may determine that the instruction corresponding to each intent in all the intents has been received, and may stop requesting the asynchronous processing service from the central control unit. Therefore, the voice assistant app may perform S492 and S493, or perform S493.

If the last queue element in the written queue element is not the end identifier, the voice assistant app may determine that not all instructions corresponding to all the intents are obtained, and may continue to request the asynchronous processing service from the central control unit. Therefore, the voice assistant app may continue to asynchronously perform S471 and S472. For the foregoing specific implementation process, refer to the descriptions of S271 and S272 mentioned in the embodiment of S291. Details are not described herein again.

S472: The voice assistant app executes the instruction.

For S472, refer to the descriptions of S271 mentioned in the embodiment of S291 in the embodiment in FIG. 5A and FIG. 5B. Details are not described herein again.

S492: The voice assistant app executes the instruction.

S493: The voice assistant app ends performing S472.

Implementations of S492 and S493 are respectively similar to those of S291 and S292 in the embodiment in FIG. 5A and FIG. 5B, and details are not described herein again.

In this way, when it is determined that the last queue element in the written queue elements is not the end identifier, after S471 and S472, S481, and S482 are performed, S491 may be performed again, so that an instruction corresponding to one or more intents in all the intents is executed. Whether a last queue element in a new written queue element is not the end identifier may continue to be determined, so that when it is determined that the last queue element is not the end identifier, the foregoing process may be repeated until it is determined that a last queue element in a written queue element is the end identifier, and then after an instruction corresponding to an intent corresponding to each queue element other than the last queue element in the written queue element is sequentially executed, sending of the unique identifier to the central control unit may be stopped.

Therefore, the voice assistant app may obtain, one by one through the central control unit based on the delivery sequence of all the intents in the speech stream, the instruction corresponding to each intent in all the intents from the queue corresponding to the unique identifier, so that the voice assistant app executes, one by one in the delivery sequence of all the intents in the speech stream, the instruction corresponding to each intent in all the intents.

In conclusion, after the ASR module and the NLU module determine all the intents in the speech stream, the DM module may return the unique identifier to the voice assistant app, and asynchronously write, in the delivery sequence of all the intents in the speech stream, the instruction corresponding to each intent in all the intents into the queue corresponding to the unique identifier. The voice assistant app may request the central control unit to return, to the voice assistant app, an instruction corresponding to an intent in the queue corresponding to the unique identifier. Then, the voice assistant app may execute the instruction corresponding to the 1^{st} intent, and asynchronously request the central control unit to continue to return, to the voice assistant app, an instruction corresponding to each intent that has been written into the queue corresponding to the unique identifier, until execution of the instruction corresponding to each intent in all the intents ends.

Based on the descriptions of the solution 1, the solution 2, and the variant solution 2, the terminal device may support, by using the ASR module and the NLU module, the user in oral input of a speech stream, and may further support recognition of two or more intents. In addition, by using the DM module, the terminal device may asynchronously process two or more intents, and sequentially execute an instruction corresponding to each intent, thereby implementing a one-sentence multi-instruction function, shortening a processing response delay, and improving user experience.

### Case 3

When the central control unit, the ASR module, the NLU module, and the DM module are separately disposed on a device side and a cloud side, for a central control unit 1, an ASR module 1, an NLU module 1, and a DM module 1 on the device side, refer to the descriptions of the modules in case 1. For a central control unit 2, an ASR module 2, an NLU module 2, and a DM module 2 on the cloud side, refer to the descriptions of the modules in case 2.

It should be understood that when network performance is relatively poor (for example, a rate is low or signal strength is poor), a terminal device may request the foregoing modules on the cloud side to provide an asynchronous processing service. When performance of a terminal device is relatively poor (for example, CPU usage is high or load is high), the terminal device may not be capable of requesting the foregoing modules on the device side to provide an asynchronous processing service.

Based on the foregoing description, the foregoing modules are separately disposed on the device side and the cloud side, to provide double insurance for the terminal device to request the asynchronous processing service, so as to ensure that the terminal device can request the asynchronous processing service in various cases. In this way, the terminal device implements a one-sentence multi-instruction function in a device-cloud collaboration manner.

For a manner in which performance is not considered, the terminal device does not need to consider network performance and performance of the terminal device, and may request the foregoing modules on the cloud side and the foregoing modules on the device side to separately provide asynchronous processing services. The terminal device uses an asynchronous processing service provided by a side that preferentially provides the asynchronous processing service for the terminal device.

For a manner in which performance is considered, the terminal device may first determine specific statuses of network performance and performance of the terminal device.

When the network performance is relatively poor, the terminal device may request the foregoing modules on the device side to provide an asynchronous processing service.

When the performance of the terminal device is relatively poor, the terminal device may request the foregoing modules on the cloud side to provide an asynchronous processing service.

When neither the network performance nor the performance of the terminal device is poor, the terminal device may request the foregoing modules on the device side and the foregoing modules on the cloud side to separately provide asynchronous processing services. For a specific implementation, refer to the specific descriptions of the manner in which performance is not considered. Details are not described herein again.

Whether the network performance or the performance of the terminal device is good or poor may be determined by using a preset standard. The preset standard may be set with reference to factors such as a real-time status of a network, a layout of the terminal device, and a device parameter of the terminal device.

In conclusion, the terminal device can implement a one-sentence multi-instruction function in a device-cloud collaboration manner.

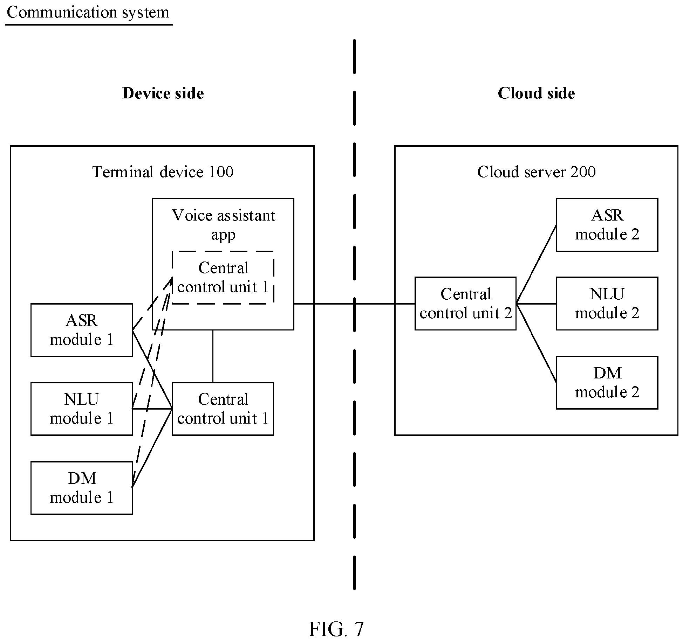

The following describes in detail a terminal device and a cloud server with reference to FIG. 7 by using an example in which the central control unit 2, the ASR module 2, the NLU module 2, and the DM module 2 are all disposed in the cloud server.

FIG. 7 is a diagram of an architecture of a communication system according to an embodiment of this application. As shown in FIG. 7, the communication system may include a terminal device 100 on a device side and a cloud server 200 on a cloud side.

The terminal device 100 may include a central control unit 1, an ASR module 1, an NLU module 1, and a DM module 1. The terminal device 100 is configured to provide an asynchronous processing service for the terminal device 100 through the central control unit 1, the ASR module 1, the NLU module 1, and the DM module 1.

The cloud server 200 may include a central control unit 2, an ASR module 2, an NLU module 2, and a DM module 2. The cloud server 200 is configured to provide an asynchronous processing service for the terminal device 100 through the central control unit 2, the ASR module 2, the NLU module 2, and the DM module 2.

The terminal device 100 is further installed with a voice assistant app. The terminal device 100 is further configured to: obtain, by using the voice assistant app, a speech stream input by a user, and request asynchronous processing services from both the terminal device 100 and the cloud server 200 based on the speech stream.

In conclusion, the speech control method in this application may be jointly implemented by the terminal device and the cloud server shown in FIG. 7.

With reference to the terminal device and the cloud server shown in FIG. 7, the following describes in detail the speech control method provided in this application by using solution 3.

### Solution 3

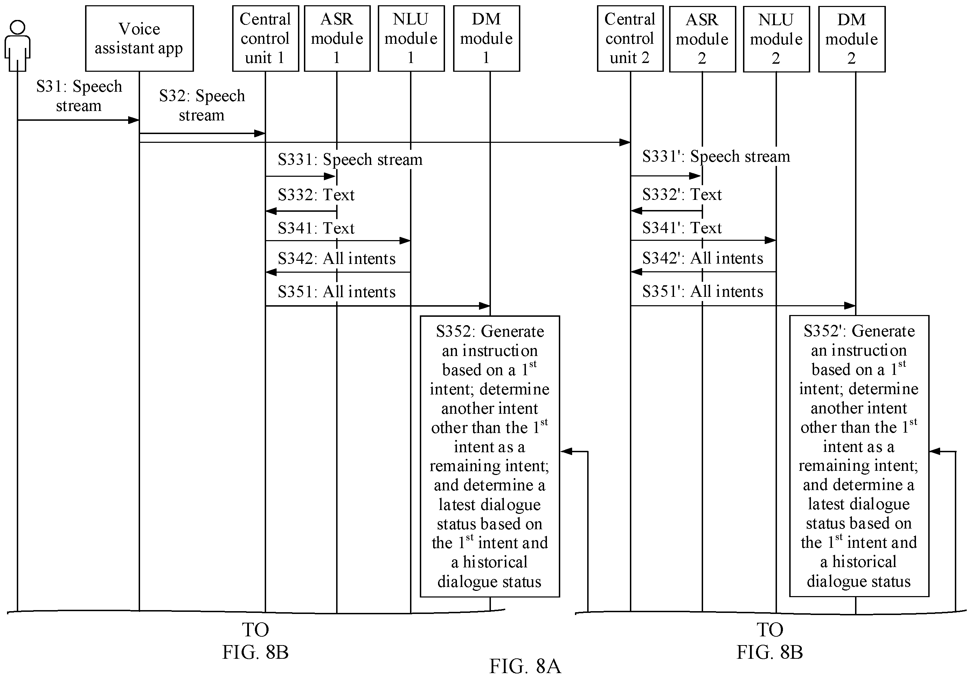

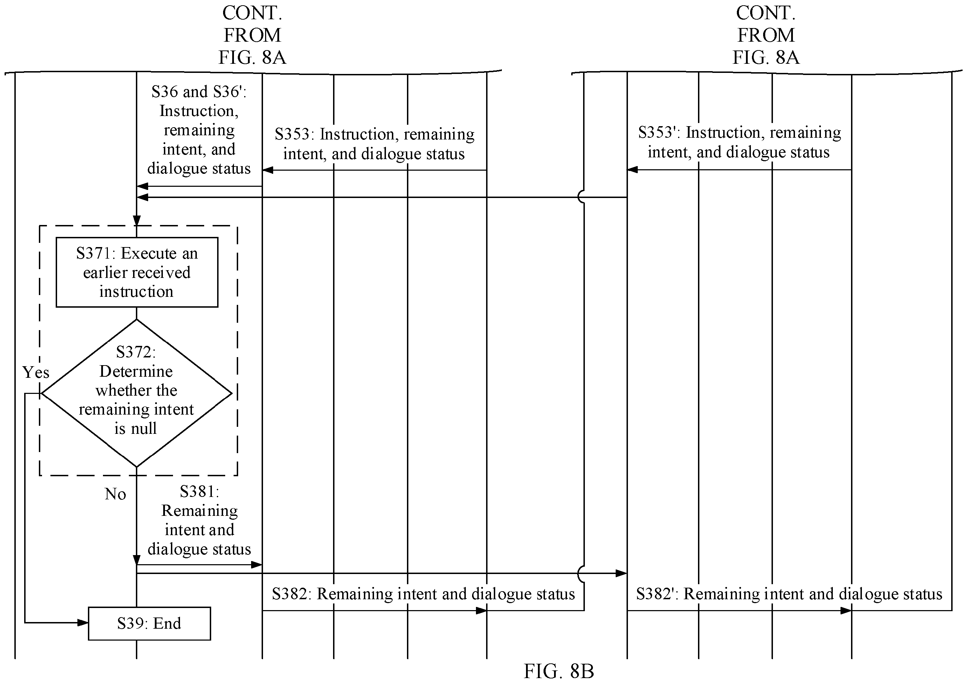

FIG. 8A and FIG. 8B are a signaling flowchart of a speech control method according to an embodiment of this application. As shown in FIG. 8A and FIG. 8B, the speech control method in this application may include the following steps.

S31: A voice assistant app obtains a speech stream that is input by a user.

An implementation of S31 is similar to the implementation of S11 in the embodiment in FIG. 4A and FIG. 4B. Details are not described herein again.

S32: The voice assistant app sends the speech stream to a central control unit 1 and/or a central control unit 2.

For a manner in which performance is not considered, the voice assistant app does not need to consider network performance and performance of a terminal device, and separately sends the speech stream to the central control unit 1 and the central control unit 2, so as to separately request asynchronous processing services from the central control unit 1 and the central control unit 2.

For a manner in which performance is considered, the voice assistant app may consider specific statuses of network performance and performance of a terminal device.

When the network performance is relatively poor, the voice assistant app sends the speech stream to the central control unit 1, to request an asynchronous processing service from the central control unit 1. When the performance of the terminal device is relatively poor, the voice assistant app sends the speech stream to the central control unit 2, to request an asynchronous processing service from the central control unit 2. When neither the network performance nor the performance of the terminal device is poor, the voice assistant app separately sends the speech stream to the central control unit 1 and the central control unit 2, to separately request asynchronous processing services from the central control unit 1 and the central control unit 2.

For the central control unit 1, an ASR module 1, an NLU module 1, and a DM module 1 on a device side, S331 to S36 may be performed.

S331: The central control unit 1 invokes the ASR module 1, and sends the speech stream to the ASR module 1.

S332: The ASR module 1 converts the speech stream into a text, and sends the text to the central control unit 1.

S341: The central control unit 1 invokes the NLU module 1, and sends the text to the NLU module 1.

S342: The NLU module 1 converts the text into all intents, and sends all the intents to the central control unit 1.

S351: The central control unit 1 invokes the DM module 1, and sends all the intents to the DM module 1.

S352: The DM module 1 determines an instruction based on a 1^{st} intent; determines an intent other than the 1^{st} intent as a remaining intent; and generates a latest dialogue status based on the 1^{st} intent and a historical dialogue status.

S353: The DM module 1 sends the instruction, the remaining intent, and the dialogue status to the central control unit 1.

S36: The central control unit 1 sends the instruction, the remaining intent, and the dialogue status to the voice assistant app.

Implementations of S331 to S36 are respectively similar to those of S131 to S16 in the embodiment in FIG. 4A and FIG. 4B, and details are not described herein again.

For the central control unit 2, an ASR module 2, an NLU module 2, and a DM module 2 on a cloud side, S331' to S36' may be performed.

S331': The central control unit 2 invokes the ASR module 2, and sends the speech stream to the ASR module 2.

S332': The ASR module 2 converts the speech stream into a text, and sends the text to the central control unit 2.

S341': The central control unit 2 invokes the NLU module 2, and sends the text to the NLU module 2.

S342': The NLU module 2 converts the text into all intents, and sends all the intents to the central control unit 2.

S351': The central control unit 2 invokes the DM module 2, and sends all the intents to the DM module 2.

S352': The DM module 2 determines an instruction based on a 1^{st} intent; determines an intent other than the 1^{st} intent as a remaining intent; and generates a latest dialogue status based on the 1^{st} intent and a historical dialogue status.

S353': The DM module 2 sends the instruction, the remaining intent, and the dialogue status to the central control unit 2.

S36': The central control unit 2 sends the instruction, the remaining intent, and the dialogue status to the voice assistant app.

Implementations of S331' to S36' are respectively similar to those of S131 to S16 in the embodiment in FIG. 4A and FIG. 4B, and details are not described herein again.

S371: The voice assistant app executes an earlier received instruction.

S372: The voice assistant app determines whether the remaining intent is null.

In S371, S372, and S381, the instruction is the instruction corresponding to the 1^{st} intent. The remaining intent is the remaining intent obtained through update. The dialogue status is the latest dialogue status.

When the voice assistant app requests an asynchronous processing service from the central control unit 1, the central control unit 1 may send an instruction, a remaining intent, and a dialogue status to the voice assistant app. To be specific, the instruction is the instruction in S36, the remaining intent is the remaining intent in S36, and the dialogue status is the dialogue status in S36.

When the voice assistant app requests an asynchronous processing service from the central control unit 2, the central control unit 2 may send an instruction, a remaining intent, and a dialogue status to the voice assistant app. To be specific, the instruction is the instruction in S36', the remaining intent is the remaining intent in S36', and the dialogue status is the dialogue status in S36'.

When the voice assistant app separately requests asynchronous processing services from the central control unit 1 and the central control unit 2, the central control unit 1 and the central control unit 2 each may send an instruction, a remaining intent, and a dialogue status to the voice assistant app. Therefore, the voice assistant app may determine an instruction, a remaining intent, and a dialogue status that are earlier received from the central control unit 1 and the central control unit 2 as the instruction in S371, the remaining intent in S372, and the dialogue status in S381.

That is, if the central control unit 1 sends the instruction, the remaining intent, and the dialogue status to the voice assistant app earlier than the central control unit 2, the instruction is the instruction in S36, the remaining intent is the remaining intent in S36, and the dialogue status is the dialogue status in S36. If the central control unit 2 sends the instruction, the remaining intent, and the dialogue status to the voice assistant app earlier than the central control unit 1, the instruction is the instruction in S36', the remaining intent is the remaining intent in S36', and the dialogue status is the dialogue status in S36'.

It should be noted that, in addition to the foregoing manner, the voice assistant app may alternatively select a corresponding instruction, remaining intent, and dialogue status according to another policy.

If the voice assistant app selects a corresponding instruction, remaining intent, and dialogue status according to another policy, the voice assistant app may perform S39. If the voice assistant app does not select a corresponding instruction, remaining intent, and dialogue status according to another policy, the voice assistant app may perform S381.

An implementation of S372 is similar to the implementation of S172 in the embodiment in FIG. 4A and FIG. 4B. Details are not described herein again.

S381: The voice assistant app sends the remaining intent and the dialogue status to the central control unit 1 and/or the central control unit 2.

For a manner in which performance is not considered, the voice assistant app does not need to consider network performance and performance of a terminal device, and separately sends the remaining intent and the dialogue status to the central control unit 1 and the central control unit 2, so as to separately request asynchronous processing services from the central control unit 1 and the central control unit 2.

For a manner in which performance is considered, the voice assistant app may consider specific statuses of network performance and performance of a terminal device.

When the network performance is relatively poor, the voice assistant app sends the remaining intent and the dialogue status to the central control unit 1, to request an asynchronous processing service from the central control unit 1. When the performance of the terminal device is relatively poor, the voice assistant app sends the remaining intent and the dialogue status to the central control unit 2, to request an asynchronous processing service from the central control unit 2. When neither the network performance nor the performance of the terminal device is poor, the voice assistant app separately sends the remaining intent and the dialogue status to the central control unit 1 and the central control unit 2, to separately request asynchronous processing services from the central control unit 1 and the central control unit 2.

S382: The central control unit 1 invokes the DM module 1, and sends the remaining intent and the dialogue status to the DM module 1. Therefore, the DM module 1 continues to perform S352. An implementation of S382 is similar to the implementation of S182 in the embodiment in FIG. 4A and FIG. 4B. Details are not described herein again.

It can be learned that, after the remaining intent and the dialogue status that are sent by the voice assistant app to the central control unit 1 in S381 are received, for the central control unit 1 and the DM module 1 on the device side, S382, S352, S353, and S36 may be performed.

S382': The central control unit 2 invokes the DM module 2, and sends the remaining intent and the dialogue status to the DM module 2. Therefore, the DM module 2 continues to perform S352'. An implementation of S382' is similar to the implementation of S182 in the embodiment in FIG. 4A and FIG. 4B. Details are not described herein again.

It can be learned that, after the remaining intent and the dialogue status that are sent by the voice assistant app to the central control unit 2 in S381 are received, for the central control unit 2 and the DM module 2 on the cloud side, S382', S352', S353', and S36' may be performed.

In this way, in an embodiment of S372, when it is determined that the remaining intent is not null, after S381, S382, S352, S353, and S36 are performed, and/or after S381, S382', S352', S353', and S36' are performed, S371 and S372 may be performed again, so that an instruction corresponding to the 1^{st} intent in the remaining intent is executed, and whether a new remaining intent is null may continue to be determined. Therefore, when it is determined that the remaining intent is not null, the foregoing process may be repeated until it is determined that a new remaining intent is null.

Then, the foregoing process may be stopped, that is, S39 is performed.

Therefore, the voice assistant app may request the DM module 1 and/or the DM module 2 to send, one by one, the instruction corresponding to each intent to the voice assistant app in the delivery sequence of all the intents in the speech stream, so that the voice assistant app executes, one by one in the delivery sequence of all the intents in the speech stream, the instruction corresponding to each intent in all the intents.

S39: The voice assistant app ends performing S371 and S372.

An implementation of S39 is similar to the implementation of S 19 in the embodiment in FIG. 4A and FIG. 4B. Details are not described herein again.

In conclusion, for a manner in which performance is not considered, after the ASR module and the NLU module on the device side determine all the intents corresponding to the speech stream, the DM module on the device side may return, to the voice assistant app, the instruction corresponding to the 1^{st} intent, the remaining intent, and the latest dialogue status. After the ASR module and the NLU module on the cloud side determine all the intents corresponding to the speech stream, the DM module on the cloud side may return, to the voice assistant app, the instruction corresponding to the 1^{st} intent, the remaining intent, and the latest dialogue status. The voice assistant app may execute an earlier received instruction corresponding to a 1^{st} intent, and may further asynchronously request each of the DM modules on the device side and the cloud side to continue to return, to the voice assistant app based on the remaining intent and the latest dialogue status, an instruction corresponding to a new 1^{st} intent, a new remaining intent, and a latest dialogue status, until execution of the instruction corresponding to each intent in all the intents ends.

For a manner in which performance is considered, regardless of the device side or the cloud side, after the ASR module and the NLU module determine all the intents corresponding to the speech stream, the DM module may return, to the voice assistant app, the instruction corresponding to the 1^{st} intent, the remaining intent, and the latest dialogue status. The voice assistant app may execute the instruction corresponding to the 1^{st} intent, and may further asynchronously request the DM module to continue to return, to the voice assistant app based on the remaining intent and the latest dialogue status, an instruction corresponding to a new 1^{st} intent, a new remaining intent, and a latest dialogue status, until execution of the instruction corresponding to each intent in all the intents ends.

Based on the description of the solution 3, the terminal device may support, by using the ASR module and the NLU module disposed on each of the device side and the cloud side, a user in oral input of a speech stream, and may further support recognition of two or more intents. In addition, by using the DM module disposed on each of the device side and the cloud side, the terminal device may asynchronously process two or more intents, and sequentially execute an instruction corresponding to each intent, thereby providing double insurance for the terminal device to implement a one-sentence multi-instruction function, and considering poor network performance and poor performance of the terminal device, so that a processing response delay is shortened, and user experience is improved.

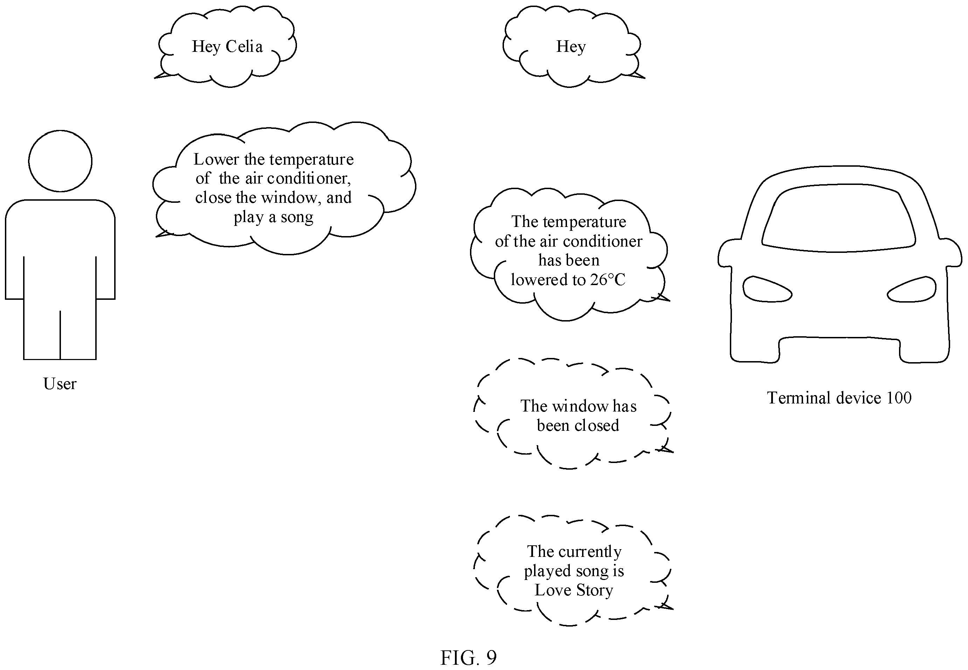

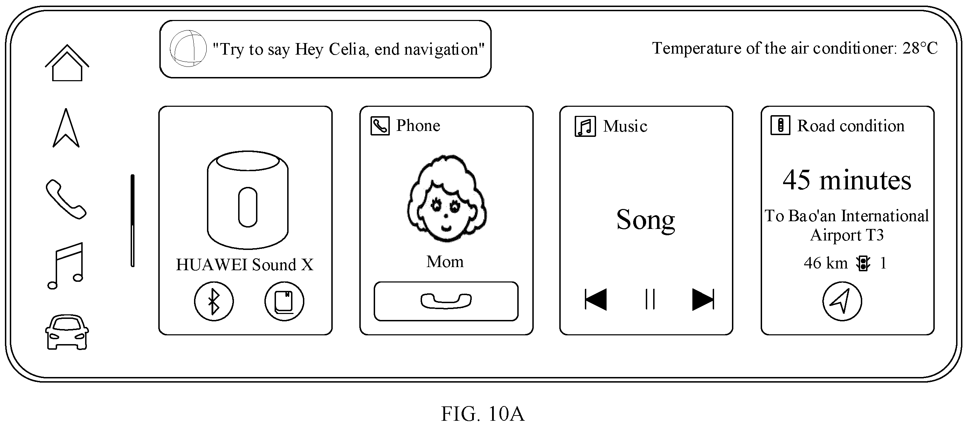

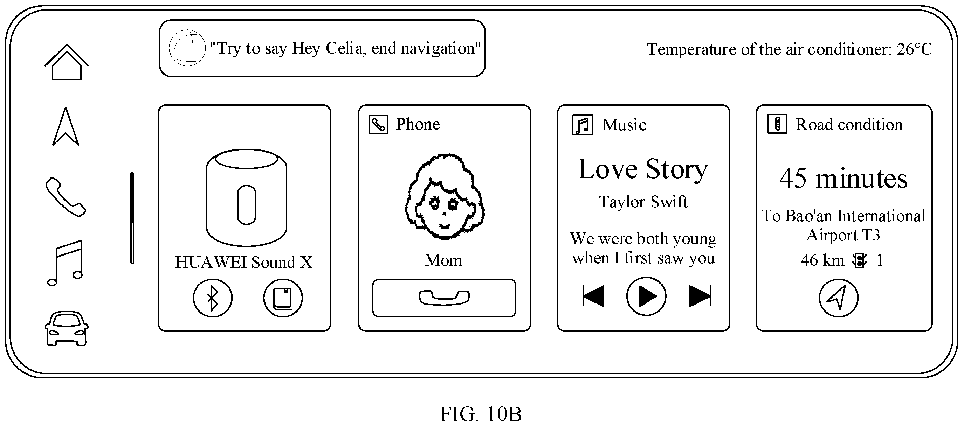

In a specific embodiment, refer to FIG. 9 and FIG. 10A and FIG. 10B. FIG. 9 is a diagram of a scenario of a speech control method according to an embodiment of this application, and FIG. 10A and FIG. 10B each are a diagram of a human-computer interaction interface according to an embodiment of this application.

As shown in FIG. 9, an example in which the terminal device 100 is a vehicle is used. A user says "Hey Celia", so that a voice assistant app is woken up. "Hey Celia" is a keyword for waking up the voice assistant app. Generally, the voice assistant app is closed or runs in the background before being woken up. After the voice assistant app is woken up, the voice assistant app plays "Hey" by using a speaker in the vehicle, so that the user confirms that the voice assistant app is woken up. The user then says: "Lower the temperature of the air conditioner, close the window, and play a song". In this way, the voice assistant app may obtain the speech stream "Lower the temperature of the air conditioner, close the window, and play a song". The voice assistant app may send the speech stream "Lower the temperature of the air conditioner, close the window, and play a song" to a central control unit. The central control unit may separately invoke an ASR module, an NLU module, and a DM module to convert the speech stream "Lower the temperature of the air conditioner, close the window, and play a song" into intent 1 "lower the temperature of the air conditioner", intent 2 "close the window", and intent 3 "play a song".

Based on the descriptions of solution 1, solution 2, variant solution 2, and solution 3, the voice assistant app may sequentially execute an instruction corresponding to intent 1, an instruction corresponding to intent 2, and an instruction corresponding to intent 3.

The instruction corresponding to intent 1 may include a control instruction used to lower the temperature of the air conditioner to 26°C, and may further include a broadcast instruction used to control the speaker in the vehicle to play "The temperature of the air conditioner has been lowered to 26°C", and a text instruction used to display the current temperature of the air conditioner on a display in the vehicle.

The instruction corresponding to intent 2 may include a control instruction used to close the window, and may further include a broadcast instruction used to control the speaker in the vehicle to play "The window has been closed".

The instruction corresponding to intent 3 may include a play instruction used to control the speaker in the vehicle to play the song Love Story, and may further include a broadcast instruction used to control the speaker in the vehicle to play "The currently played song is Love Story", and a card instruction used to display a play interface of the song Love Story in a form of a card on the display in the vehicle.

In this way, the display in the vehicle may change from a user interface illustratively shown in FIG. 10A to a user interface illustratively shown in FIG. 10B, so that the user can view that the temperature of the air conditioner is lowered from 28°C to 26°C and view the play interface of the song Love Story.

Therefore, the vehicle can implement a one-sentence multi-instruction function.

Based on some of the foregoing embodiments, the following describes a speech control method provided in this application.

For example, this application provides a speech control method.

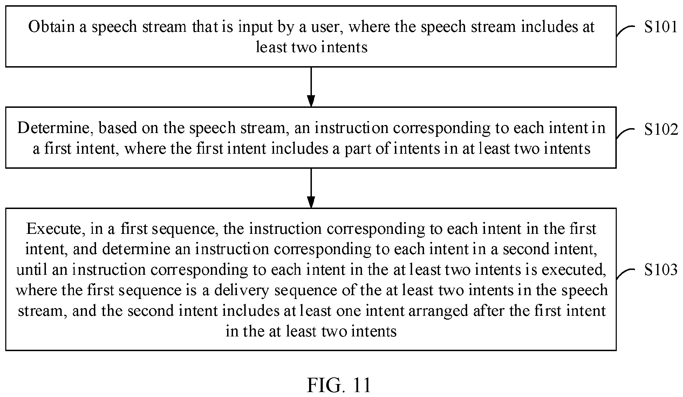

FIG. 11 is a flowchart of a speech control method according to an embodiment of this application. As shown in FIG. 11, the speech control method in this application may include the following steps.

S101: Obtain a speech stream that is input by a user, where the speech stream includes at least two intents.

S102: Determine, based on the speech stream, an instruction corresponding to each intent in a first intent, where the first intent includes a part of the at least two intents.

S103: Execute, in a first sequence, the instruction corresponding to each intent in the first intent, and determine an instruction corresponding to each intent in a second intent, until an instruction corresponding to each intent in the at least two intents is executed, where the first sequence is a delivery sequence of the at least two intents in the speech stream, and the second intent includes at least one intent that is in the at least two intents and that is arranged after the first intent.

The speech control method in this application may be performed by a terminal device. For a specific implementation of the terminal device, refer to the foregoing description content of the terminal device 100 in FIG. 1 and FIG. 3. Details are not described herein again.

For specific implementations of the foregoing steps, refer to the description content of the embodiments in FIG. 4A and FIG. 4B to FIG. 6A and FIG. 6B. Details are not described herein again.

When the terminal device includes a first application module and a third application module, the first application module and the third application module may perform the following steps:
the first application module obtains the speech stream;
the third application module determines, based on the at least two intents corresponding to the speech stream, the instruction corresponding to each intent in the first intent, and continues to determine the instruction corresponding to each intent in the second intent; and
the first application module obtains, from the third application module, the instruction corresponding to each intent in the first intent, executes, in the first sequence, the instruction corresponding to each intent in the first intent, and when determining that instructions corresponding to all of the at least two intents are not completely obtained, obtains, from the third application module, the instruction corresponding to each intent in the second intent, until the instructions corresponding to all of the at least two intents are completely obtained.

For a specific implementation in which the first application module performs the foregoing steps, refer to the description content of the corresponding steps performed by the voice assistant app in the embodiments in FIG. 4A and FIG. 4B to FIG. 6A and FIG. 6B. For a specific implementation in which the third application module performs the foregoing steps, refer to the description content of the corresponding steps performed by the DM module in the embodiments in FIG. 4A and FIG. 4B to FIG. 6A and FIG. 6B. Details are not described herein again.

Based on the foregoing description, the third application module may obtain the at least two intents in a plurality of manners.

In some embodiments, the first application module obtains the at least two intents based on the speech stream. Therefore, the first application module may send the at least two intents to the third application module.

The first application module is a voice assistant application, and the third application module is a dialogue management module. Alternatively, the first application module and the third application module are modules in a voice assistant application.

For specific implementations of the foregoing steps, refer to description content of the corresponding steps performed by the voice assistant app loaded in the central control unit in the embodiments in FIG. 4A and FIG. 4B to FIG. 6A and FIG. 6B. Details are not described herein again.

In some other embodiments, when the terminal device further includes a second application module, the third application module may obtain the at least two intents through the second application module.

Correspondingly, the first application module sends the speech stream to the second application module. The second application module obtains the at least two intents based on the speech stream. The second application module may send the at least two intents to the third application module. Correspondingly, the first application module may obtain, from the third application module through the second application module, an instruction corresponding to any intent.

The first application module is a voice assistant application, the second application module is a central control unit, and the third application module is a dialogue management module.

For specific implementations of the foregoing steps, refer to description content of corresponding steps performed by the voice assistant app, corresponding steps performed by the central control unit, and corresponding steps performed by the DM module in the embodiments in FIG. 4A and FIG. 4B to FIG. 6A and FIG. 6B. Details are not described herein again.

Based on the foregoing description, the terminal device may implement the speech control method in this application in a plurality of manners.

In a feasible implementation, when the first intent includes only one intent, the method may include the following steps:
the third application module determines an instruction corresponding to the first intent, where an initial intent of the first intent is an intent arranged in a 1^{st} place in the at least two intents in the first sequence, and the instruction corresponding to the first intent is determined based on a historical dialogue status;
the first application module obtains, from the third application module, the instruction corresponding to the first intent;
the first application module executes the instruction corresponding to the first intent, and when determining that the instructions corresponding to all of the at least two intents are not completely obtained, sends a first request to the third application module, where the first request is used to request the instruction corresponding to each intent in the second intent;
after receiving the first request, the third application module updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
the first application module continues to obtain, from the third application module, the instruction corresponding to the updated first intent, and stops sending the first request to the third application module when determining that the instructions corresponding to all of the at least two intents are obtained.

For specific implementations of the foregoing steps, refer to description content of corresponding steps performed by the voice assistant app, corresponding steps performed by the central control unit, and corresponding steps performed by the DM module in the embodiment in FIG. 4A and FIG. 4B. Details are not described herein again.

In addition to the foregoing implementation, on the basis of the foregoing embodiment, the method may specifically include:
the third application module determines the instruction corresponding to the first intent and a remaining intent, where the remaining intent includes all intents that are in the at least two intents and that are arranged after the first intent, and an arrangement sequence of the remaining intent is consistent with the first sequence;
the first application module obtains, from the third application module, the instruction corresponding to the first intent and the remaining intent;
the first application module executes the instruction corresponding to the first intent, and when determining that the remaining intent is not null, sends the first request to the third application module, where the first request includes the remaining intent;
after receiving the first request, the third application module updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
the first application module continues to obtain, from the third application module, the instruction corresponding to the updated first intent and the updated remaining intent, and stops sending the first request to the third application module when determining that the remaining intent is null.

For specific implementations of the foregoing steps, refer to description content of corresponding steps performed by the voice assistant app, corresponding steps performed by the central control unit, and corresponding steps performed by the DM module in the embodiment in FIG. 4A and FIG. 4B. Details are not described herein again.

In conclusion, the remaining intent may be forwarded between the first application module and the third application module, so that the first application module may determine, based on whether the remaining intent is null, whether the instructions corresponding to all of the at least two intents are completely executed.

It should be noted that after the third application module determines a dialogue status, the third application module may store the dialogue status, so that the third application module can accurately determine, based on the dialogue status, the instruction corresponding to the updated first intent.

In addition to the foregoing implementation, on the basis of the foregoing embodiment, the method may specifically include:
the third application module determines the instruction corresponding to the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
the first application module obtains, from the third application module, the instruction corresponding to the first intent, the remaining intent, and the dialogue status;
the first application module executes the instruction corresponding to the first intent, and after determining that the remaining intent is not null, sends the first request to the third application module, where the first request includes the remaining intent and the dialogue status;
after receiving the first request, the third application module updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
the first application module continues to obtain, from the third application module, the instruction corresponding to the updated first intent, the updated remaining intent, and the updated dialogue status, and stops sending the first request to the third application module when determining that the remaining intent is null.

For specific implementations of the foregoing steps, refer to description content of corresponding steps performed by the voice assistant app, corresponding steps performed by the central control unit, and corresponding steps performed by the DM module in the embodiment in FIG. 4A and FIG. 4B. Details are not described herein again.

In conclusion, the remaining intent and the dialogue status may be forwarded between the first application module and the third application module, so that the first application module can determine, based on whether the remaining intent is null, whether the instructions corresponding to all of the at least two intents are completely executed, the third application module can accurately determine, based on the dialogue status, the instruction corresponding to the updated first intent, and the third application module does not need to store the dialogue status.

In another feasible implementation, when the first intent includes only a 1^{st} intent, and the 1^{st} intent is an intent arranged in a 1^{st} place in the at least two intents in the first sequence, the method may include the following steps:
the third application module determines the instruction corresponding to each intent in the at least two intents and a first identifier, and writes, into a first queue corresponding to the first identifier, an instruction corresponding to each intent in a remaining intent, where the remaining intent includes another intent other than the 1^{st} intent in the at least two intents, and an arrangement sequence of queue elements in the first queue is consistent with the first sequence;
the first application module obtains, from the third application module, an instruction corresponding to the 1^{st} intent and the first identifier;
the first application module executes the instruction corresponding to the 1^{st} intent, and extracts, from the first queue based on the first identifier, a written queue element arranged in sequence as the second intent, where an initial queue element of the written queue element includes at least an instruction corresponding to a next intent that is in the remaining intent and that is arranged after the 1^{st} intent; and
the first application module executes, in the first sequence, an instruction corresponding to each intent corresponding to the written queue element, and when determining that the instructions corresponding to all of the at least two intents are not completely obtained, continues to extract, from the first queue based on the first identifier, a newly written queue element arranged after the written queue element, until it is determined that the instructions corresponding to all of the at least two intents are completely obtained.

For a specific implementation of the foregoing process, refer to the description content of the embodiments in FIG. 5A and FIG. 5B and FIG. 6A and FIG. 6B. For a specific implementation of the first queue, refer to the description content of the queue corresponding to the unique identifier in the embodiments in FIG. 5A and FIG. 5B and FIG. 6A and FIG. 6B. For a specific implementation of the first identifier, refer to the description content of the unique identifier in the embodiments in FIG. 5A and FIG. 5B and FIG. 6A and FIG. 6B. Details are not described herein again.

Based on the foregoing description, the terminal device may determine, in a plurality of manners, whether the instructions corresponding to all of the at least two intents are completely obtained.

In some embodiments, after an instruction corresponding to a last intent in the remaining intent is written into the first queue, the third application module writes, in the first queue, an end identifier after the instruction corresponding to the last intent in the remaining intent, where the end identifier indicates that no instruction corresponding to an intent exists in the first queue.

Therefore, after determining that a last queue element in the written queue element is the end identifier, the first application module determines that the instructions corresponding to all of the at least two intents are completely obtained.

After determining that a last queue element in the written queue element is not the end identifier, the first application module determines that the instructions corresponding to all of the at least two intents are not completely obtained.

For a specific implementation of the foregoing process, refer to the description content of the embodiments in FIG. 5A and FIG. 5B and FIG. 6A and FIG. 6B. Details are not described herein again.

In conclusion, it may be determined, by using the end identifier, whether the instructions corresponding to all of the at least two intents are completely obtained.

In some other embodiments, the first application module may record a total quantity of all of the at least two intents, and record a quantity of intents corresponding to a written queue element extracted from the first queue each time. Therefore, the first application module may determine whether the foregoing quantity of intents is equal to the quantity of intents, to determine whether the instructions corresponding to all of the at least two intents are completely obtained.

In some other embodiments, the first application module may record a total quantity of all of the at least two intents, and record a location, in all the intents, of an intent corresponding to a last queue element in a written queue element extracted from the first queue each time. Therefore, the first application module may determine whether the intent corresponding to the foregoing location is a last intent in all of the at least two intents, to determine whether the instructions corresponding to all of the at least two intents are completely obtained.

For example, this application further provides a speech control method. The speech control method may include the following steps.

Step 201: A terminal device obtains a speech stream that is input by a user, where the speech stream includes at least two intents.

Step 202: The terminal device sends the speech stream to a server.

Step 203: The server determines an instruction corresponding to each intent in a first intent, where the first intent includes a part of the at least two intents.

Step 204: The server sends the instruction corresponding to each intent in the first intent to the terminal device.

Step 205: The terminal device executes, in a first sequence, the instruction corresponding to each intent in the first intent, where the first sequence is a delivery sequence of the at least two intents in the speech stream; and when determining that instructions corresponding to all of the at least two intents are not completely obtained, obtains, from the server, an instruction corresponding to each intent in a second intent, where the second intent includes at least one intent that is in the at least two intents and that is arranged after the first intent.

Step 206: The server determines the instruction corresponding to each intent in the second intent. Step 207: The server sends the instruction corresponding to each intent in the second intent to the terminal device.

Step 208: The terminal device executes, in the first sequence, the instruction corresponding to each intent in the second intent, until an instruction corresponding to each intent in the at least two intents is executed.

The speech control method in this application may be performed by the terminal device and the server. For a specific implementation of the terminal device, refer to the foregoing description content of the terminal device 100 in FIG. 1 and the terminal device 100 in FIG. 2. For a specific implementation of the server, refer to the foregoing description content of the server 200 in FIG. 2. Details are not described herein again.

For specific implementations of the foregoing steps, refer to the description content of the embodiments in FIG. 4A and FIG. 4B to FIG. 6A and FIG. 6B. Details are not described herein again.

When the first intent includes only one intent, the method may include the following steps:
the server determines an instruction corresponding to the first intent, where an initial intent of the first intent is an intent arranged in a 1^{st} place in the at least two intents in the first sequence, and the instruction corresponding to the first intent is determined based on a historical dialogue status;
the server sends the instruction corresponding to the first intent to the terminal device;
the terminal device executes the instruction corresponding to the first intent, and when determining that the instructions corresponding to all of the at least two intents are not completely obtained, sends a first request to the server, where the first request is used to request the instruction corresponding to each intent in the second intent;
after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent;
the server sends the instruction corresponding to the updated first intent to the terminal device, until the first request is not received from the terminal device after first duration; and
the terminal device continues to obtain, from the server, the instruction corresponding to the updated first intent, and stops sending the first request to the server when determining that the instructions corresponding to all of the at least two intents are obtained.

For a specific implementation of performing the foregoing process by the terminal device, refer to the description content of the corresponding steps performed by the voice assistant app in the embodiment in FIG. 4A and FIG. 4B. For a specific implementation of performing the foregoing process by the server, refer to the description content of the corresponding steps performed by the central control unit and the DM module in the embodiment in FIG. 4A and FIG. 4B. Details are not described herein again.

In addition to the foregoing implementation, on the basis of the foregoing embodiment, the method may specifically include:
the server determines the instruction corresponding to the first intent and a remaining intent, where the remaining intent includes all intents that are in the at least two intents and that are arranged after the first intent, and an arrangement sequence of the remaining intent is consistent with the first sequence;
the server sends the instruction corresponding to the first intent and the remaining intent to the terminal device;
the terminal device executes the instruction corresponding to the first intent, and when determining that the instructions corresponding to all of the at least two intents are not completely obtained, sends a first request to the server, where the first request includes the remaining intent;
after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent;
the server sends the instruction corresponding to the updated first intent and the updated remaining intent to the terminal device, until the first request is not received from the terminal device after the first duration; and
the terminal device continues to obtain, from the server, the instruction corresponding to the updated first intent and the updated remaining intent, and stops sending the first request to the server when determining that the instructions corresponding to all of the at least two intents are obtained.

For a specific implementation of performing the foregoing process by the terminal device, refer to the description content of the corresponding steps performed by the voice assistant app in the embodiment in FIG. 4A and FIG. 4B. For a specific implementation of performing the foregoing process by the server, refer to the description content of the corresponding steps performed by the central control unit and the DM module in the embodiment in FIG. 4A and FIG. 4B. Details are not described herein again.

In addition to the foregoing implementation, on the basis of the foregoing embodiment, the method may specifically include:
the server determines the instruction corresponding to the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
the server sends the instruction corresponding to the first intent, the remaining intent, and the dialogue status to the terminal device;
the terminal device executes the instruction corresponding to the first intent, and when determining that the instructions corresponding to all of the at least two intents are not completely obtained, sends a first request to the server, where the first request includes the remaining intent and the dialogue status;
after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status;
the server sends the instruction corresponding to the updated first intent, the updated remaining intent, and the updated dialogue status to the terminal device, until the first request is not received from the terminal device after first duration; and
the terminal device continues to obtain, from the server, the instruction corresponding to the updated first intent, the updated remaining intent, and the updated dialogue status, and stops sending the first request to the server when determining that the instructions corresponding to all of the at least two intents are obtained.

For a specific implementation of performing the foregoing process by the terminal device, refer to the description content of the corresponding steps performed by the voice assistant app in the embodiment in FIG. 4A and FIG. 4B. For a specific implementation of performing the foregoing process by the server, refer to the description content of the corresponding steps performed by the central control unit and the DM module in the embodiment in FIG. 4A and FIG. 4B. Details are not described herein again.

When the first intent includes only a 1^{st} intent, and the 1^{st} intent is an intent arranged in a 1^{st} place in the at least two intents in the first sequence, the method may include the following steps:
the server determines an instruction corresponding to each intent in the at least two intents and a first identifier;
the server writes, into a first queue corresponding to the first identifier, an instruction corresponding to each intent in a remaining intent, where the remaining intent includes another intent other than the 1^{st} intent in the at least two intents, and an arrangement sequence of queue elements in the first queue is consistent with the first sequence; and sends an instruction corresponding to the 1^{st} intent and the first identifier to the terminal device;
the terminal device executes the instruction corresponding to the 1^{st} intent, and sends the first identifier to the server, where the first identifier is used to request the instruction corresponding to each intent in the second intent;
after receiving the first identifier, the server extracts, from the first queue based on the first identifier, a written queue element arranged in sequence, where an initial queue element of the written queue element includes at least an instruction corresponding to a next intent that is in the remaining intent and that is arranged after the 1^{st} intent; and sends the written queue element to the terminal device, until the first identifier is not received from the terminal device after second duration; and
the terminal device executes, in the first sequence, an instruction corresponding to each intent corresponding to the written queue element, and when determining that the instructions corresponding to all of the at least two intents are not completely obtained, continues to send the first identifier to the server, until it is determined that the instructions corresponding to all of the at least two intents are completely obtained.

For a specific implementation of performing the foregoing process by the terminal device, refer to the description content of the corresponding steps performed by the voice assistant app in the embodiments in FIG. 5A and FIG. 5B and FIG. 6A and FIG. 6B. For a specific implementation of performing the foregoing process by the server, refer to the description content of the corresponding steps performed by the central control unit and the DM module in the embodiments in FIG. 5A and FIG. 5B and FIG. 6A and FIG. 6B. Details are not described herein again.

Based on the foregoing description, the server further performs the following step:
after an instruction corresponding to a last intent in the remaining intent is written into the first queue, writing, in the first queue, an end identifier after the instruction corresponding to the last intent in the remaining intent, where the end identifier indicates that no instruction corresponding to an intent exists in the first queue.

Therefore, when the last queue element in the written queue element is the end identifier, the terminal device determines that the instructions corresponding to all of the at least two intents are completely obtained; or when the last queue element in the written queue element is not the end identifier, the terminal device determines that the instructions corresponding to all of the at least two intents are not completely obtained.

For a specific implementation in which the server performs the foregoing process, refer to the description content of the embodiment corresponding to S453 performed by the DM module in the embodiments in FIG. 5A and FIG. 5B and FIG. 6A and FIG. 6B. Details are not described herein again.

For example, this application further provides a speech control method. The speech control method may include the following steps.

Step 301: Obtain a speech stream that is input by a user, where the speech stream includes at least two intents.

Step 302: Send the speech stream to a server, and determine an instruction corresponding to each intent in the at least two intents.

Step 303: Obtain, from a terminal device and/or the server, an instruction corresponding to each intent in a first intent, where the first intent includes a part of the at least two intents.

Step 304: Execute, in a first sequence, the instruction corresponding to each intent in the first intent, where the first sequence is a delivery sequence of the at least two intents in the speech stream; and when determining that instructions corresponding to all of the at least two intents are not completely obtained, obtain, from the terminal device and/or the server, an instruction corresponding to each intent in a second intent, where the second intent includes at least one intent that is in the at least two intents and that is arranged after the first intent.

Step 305: Execute, in the first sequence, the instruction corresponding to each intent in the second intent, until the instruction corresponding to each intent in the at least two intents is executed.

The speech control method in this application may be performed by the terminal device and the server. For a specific implementation of the terminal device, refer to the foregoing description content of the terminal device 100 in FIG. 1 and the terminal device 100 in FIG. 7. For a specific implementation of the server, refer to the foregoing description content of the server 200 in FIG. 7. Details are not described herein again.

For specific implementations of the foregoing steps, refer to the description content of the embodiment in FIG. 8A and FIG. 8B. Details are not described herein again.

Based on the foregoing description, when the first intent includes only one intent, the method may include the following steps:
obtaining, from the terminal device and/or the server, the instruction corresponding to each intent in the first intent, where an initial intent of the first intent is an intent arranged in a 1^{st} place in the at least two intents in the first sequence, and an instruction corresponding to the first intent is determined based on a historical dialogue status;
executing the instruction corresponding to the first intent, and when determining that the instructions corresponding to all of the at least two intents are not completely obtained, sending a first request to the server, where the first request is used to request the instruction corresponding to each intent in the second intent, so that after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
continuing to determine to obtain, from the terminal device and/or the server, the instruction corresponding to the updated first intent, and stopping sending the first request to the server when determining that the instructions corresponding to all of the at least two intents are obtained.

For specific implementations of the foregoing steps, refer to description content of corresponding steps performed by the voice assistant app, corresponding steps performed by the central control unit, and corresponding steps performed by the DM module in the embodiment in FIG. 8A and FIG. 8B. Details are not described herein again.

In addition to the foregoing implementation, on the basis of the foregoing embodiment, the method may specifically include:
obtaining, from the terminal device and/or the server, the instruction corresponding to each intent in the first intent and a remaining intent, where the remaining intent includes all intents that are in the at least two intents and that are arranged after the first intent, and an arrangement sequence of the remaining intent is consistent with the first sequence;
executing the instruction corresponding to the first intent, and when determining that the instructions corresponding to all of the at least two intents are not completely obtained, sending the first request to the server, where the first request includes the remaining intent, so that after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
continuing to determine to obtain, from the terminal device and/or the server, the instruction corresponding to the updated first intent and the updated remaining intent, and stopping sending the first request to the server when determining that the instructions corresponding to all of the at least two intents are obtained.

For specific implementations of the foregoing steps, refer to description content of corresponding steps performed by the voice assistant app, corresponding steps performed by the central control unit, and corresponding steps performed by the DM module in the embodiment in FIG. 8A and FIG. 8B. Details are not described herein again.

In addition to the foregoing implementation, on the basis of the foregoing embodiment, the method may specifically include:
obtaining, from the terminal device and/or the server, the instruction corresponding to each intent in the first intent, the remaining intent, and a dialogue status, where the dialogue status is determined based on the one intent and the historical dialogue status, and the dialogue status indicates the slot information corresponding to the at least two intents after the instruction corresponding to the first intent is executed;
executing the instruction corresponding to the first intent, and when determining that the instructions corresponding to all of the at least two intents are not completely obtained, sending the first request to the server, where the first request includes the remaining intent and the dialogue status, so that after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
continuing to determine to obtain, from the terminal device and/or the server, the instruction corresponding to the updated first intent, the updated remaining intent, and the updated dialogue status, and stopping sending the first request to the server when determining that the instructions corresponding to all of the at least two intents are obtained.

For specific implementations of the foregoing steps, refer to description content of corresponding steps performed by the voice assistant app, corresponding steps performed by the central control unit, and corresponding steps performed by the DM module in the embodiment in FIG. 8A and FIG. 8B. Details are not described herein again.

For example, this application provides a terminal device, including a memory and a processor. The memory is configured to store program instructions, and the processor is configured to invoke the program instructions in the memory, so that the terminal device performs the speech control method in the foregoing embodiments.

For example, this application provides a server, including a memory and a processor. The memory is configured to store program instructions, and the processor is configured to invoke the program instructions in the memory, so that the server performs the speech control method in the foregoing embodiments.

For example, this application provides a chip. A chip system is used in a terminal device including a memory and a sensor. The chip system includes a processor. When the processor executes computer instructions stored in the memory, a communication device performs the speech control method in the foregoing embodiments.

For example, this application provides a computer-readable storage medium. The computer-readable storage medium stores a computer program. When the computer program is executed by a processor, a terminal device is enabled to implement the speech control method in the foregoing embodiments.

For example, this application provides a computer program product, including executable instructions. The executable instructions are stored in a readable storage medium. At least one processor of a terminal device may read the executable instructions from the readable storage medium, and the at least one processor executes the executable instructions, to enable the terminal device to implement the speech control method in the foregoing embodiments.

In the foregoing embodiments, all or some of the functions may be implemented by using software, hardware, or a combination of software and hardware. When software is used to implement the functions, all or some of the functions may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or other programmable apparatuses. The computer instructions may be stored in a computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures in the methods in the foregoing embodiments may be completed by a computer program instructing related hardware. The program may be stored in a computer-readable storage medium. When the program is executed, the procedures in the foregoing method embodiments may be included. The foregoing storage medium includes any medium that can store program code, such as a ROM or a random access memory RAM, a magnetic disk, or an optical disc.

## Claims

1. A speech control method, wherein the method comprises:
obtaining a speech stream that is input by a user, wherein the speech stream comprises at least two intents;
determining, based on the speech stream, an instruction corresponding to each intent in a first intent, wherein the first intent comprises a part of the at least two intents; and
executing, in a first sequence, the instruction corresponding to each intent in the first intent, and determining an instruction corresponding to each intent in a second intent, until an instruction corresponding to each intent in the at least two intents is executed, wherein the first sequence is a delivery sequence of the at least two intents in the speech stream, and the second intent comprises at least one intent that is in the at least two intents and that is arranged after the first intent.

2. The method according to claim 1, wherein a terminal device comprises a first application module and a third application module; and
the method specifically comprises:
obtaining, by the first application module, the speech stream;
determining, by the third application module based on the at least two intents corresponding to the speech stream, the instruction corresponding to each intent in the first intent, and continuing to determine the instruction corresponding to each intent in the second intent; and
obtaining, by the first application module from the third application module, the instruction corresponding to each intent in the first intent, executing, in the first sequence, the instruction corresponding to each intent in the first intent, and when determining that instructions corresponding to all of the at least two intents are not completely obtained, obtaining, from the third application module, the instruction corresponding to each intent in the second intent, until the instructions corresponding to all of the at least two intents are completely obtained.

3. The method according to claim 2, wherein the method further comprises:
obtaining, by the first application module, the at least two intents based on the speech stream; and
sending, by the first application module, the at least two intents to the third application module.

4. The method according to claim 3, wherein
the first application module is a voice assistant application, and the third application module is a dialogue management module; or
the first application module and the third application module are modules in a voice assistant application.

5. The method according to claim 2, wherein the terminal device further comprises a second application module;
the method further comprises:
sending, by the first application module, the speech stream to the second application module;
obtaining, by the second application module, the at least two intents based on the speech stream; and
sending, by the second application module, the at least two intents to the third application module; and
obtaining, by the first application module from the third application module, an instruction corresponding to any intent comprises:
obtaining, by the first application module from the third application module through the second application module, the instruction corresponding to any intent.

6. The method according to claim 5, wherein
the first application module is a voice assistant application, the second application module is a central control unit, and the third application module is a dialogue management module.

7. The method according to any one of claims 2 to 6, wherein the first intent comprises only one intent, and the method specifically comprises:
determining, by the third application module, an instruction corresponding to the first intent, wherein an initial intent of the first intent is an intent arranged in a 1^{st} place in the at least two intents in the first sequence, and the instruction corresponding to the first intent is determined based on a historical dialogue status;
obtaining, by the first application module from the third application module, the instruction corresponding to the first intent;
executing, by the first application module, the instruction corresponding to the first intent, and when determining that the instructions corresponding to all of the at least two intents are not completely obtained, sending a first request to the third application module, wherein the first request is used to request the instruction corresponding to each intent in the second intent;
after receiving the first request, updating, by the third application module, the first intent to a next intent arranged after the first intent in the first sequence, updating the historical dialogue status to slot information corresponding to the at least two intents after the instruction corresponding to the first intent is executed, and determining an instruction corresponding to an updated first intent; and
continuing, by the first application module, to obtain, from the third application module, the instruction corresponding to the updated first intent, and stopping sending the first request to the third application module when determining that the instructions corresponding to all of the at least two intents are obtained.

8. The method according to claim 7, wherein the method specifically comprises:
determining, by the third application module, the instruction corresponding to the first intent and a remaining intent, wherein the remaining intent comprises all intents that are in the at least two intents and that are arranged after the first intent, and an arrangement sequence of the remaining intent is consistent with the first sequence;
obtaining, by the first application module from the third application module, the instruction corresponding to the first intent and the remaining intent;
executing, by the first application module, the instruction corresponding to the first intent, and when determining that the remaining intent is not null, sending the first request to the third application module, wherein the first request comprises the remaining intent;
after receiving the first request, updating, by the third application module, the first intent to an intent arranged in a 1^{st} place in the remaining intent in the first sequence, updating the historical dialogue status to the slot information corresponding to the at least two intents after the instruction corresponding to the first intent is executed, and determining an instruction corresponding to an updated first intent and an updated remaining intent; and
continuing, by the first application module, to obtain, from the third application module, the instruction corresponding to the updated first intent and the updated remaining intent, and stopping sending the first request to the third application module when determining that the remaining intent is null.

9. The method according to claim 8, wherein the method specifically comprises:
determining, by the third application module, the instruction corresponding to the first intent, the remaining intent, and a dialogue status, wherein the dialogue status is determined based on the one intent and the historical dialogue status, and the dialogue status indicates the slot information corresponding to the at least two intents after the instruction corresponding to the first intent is executed;
obtaining, by the first application module from the third application module, the instruction corresponding to the first intent, the remaining intent, and the dialogue status;
executing, by the first application module, the instruction corresponding to the first intent, and after determining that the remaining intent is not null, sending the first request to the third application module, wherein the first request comprises the remaining intent and the dialogue status;
after receiving the first request, updating, by the third application module, the first intent to the intent arranged in the 1^{st} place in the remaining intent in the first sequence, updating the historical dialogue status to the dialogue status, and determining the instruction corresponding to the updated first intent, the updated remaining intent, and the updated dialogue status; and
continuing, by the first application module, to obtain, from the third application module, the instruction corresponding to the updated first intent, the updated remaining intent, and the updated dialogue status, and stopping sending the first request to the third application module when determining that the remaining intent is null.

10. The method according to any one of claims 2 to 6, wherein the first intent comprises only a 1^{st} intent, and the 1^{st} intent is an intent arranged in a 1^{st} place in the at least two intents in the first sequence; and
the method specifically comprises:
determining, by the third application module, the instruction corresponding to each intent in the at least two intents and a first identifier, and writing, into a first queue corresponding to the first identifier, an instruction corresponding to each intent in a remaining intent, wherein the remaining intent comprises another intent other than the 1^{st} intent in the at least two intents, and an arrangement sequence of queue elements in the first queue is consistent with the first sequence;
obtaining, by the first application module from the third application module, an instruction corresponding to the 1^{st} intent and the first identifier;
executing, by the first application module, the instruction corresponding to the 1^{st} intent, and extracting, from the first queue based on the first identifier, a written queue element arranged in sequence as the second intent, wherein an initial queue element of the written queue element comprises at least an instruction corresponding to a next intent that is in the remaining intent and that is arranged after the 1^{st} intent; and
executing, by the first application module in the first sequence, an instruction corresponding to each intent corresponding to the written queue element, and when determining that the instructions corresponding to all of the at least two intents are not completely obtained, continuing to extract, from the first queue based on the first identifier, a newly written queue element arranged after the written queue element, until it is determined that the instructions corresponding to all of the at least two intents are completely obtained.

11. The method according to claim 10, wherein
the method further comprises:
after an instruction corresponding to a last intent in the remaining intent is written into the first queue, writing, by the third application module in the first queue, an end identifier after the instruction corresponding to the last intent in the remaining intent, wherein the end identifier indicates that no instruction corresponding to an intent exists in the first queue; and
determining, by the first application module, whether the instructions corresponding to all of the at least two intents are completely obtained comprises:
after determining that a last queue element in the written queue element is the end identifier, determining, by the first application module, that the instructions corresponding to all of the at least two intents are completely obtained; or
after determining that a last queue element in the written queue element is not the end identifier, determining, by the first application module, that the instructions corresponding to all of the at least two intents are not completely obtained.

12. A speech control method, wherein the method comprises:
obtaining a speech stream that is input by a user, wherein the speech stream comprises at least two intents;
sending the speech stream to a server;
receiving, from the server, an instruction corresponding to each intent in a first intent, wherein the first intent comprises a part of the at least two intents;
executing, in a first sequence, the instruction corresponding to each intent in the first intent, wherein the first sequence is a delivery sequence of the at least two intents in the speech stream; and when determining that instructions corresponding to all of the at least two intents are not completely obtained, obtaining, from the server, an instruction corresponding to each intent in a second intent, wherein the second intent comprises at least one intent that is in the at least two intents and that is arranged after the first intent; and
executing, in the first sequence, the instruction corresponding to each intent in the second intent, until an instruction corresponding to each intent in the at least two intents is executed.

13. The method according to claim 12, wherein the first intent comprises only one intent, and the method specifically comprises:
receiving, from the server, an instruction corresponding to the first intent, wherein an initial intent of the first intent is an intent arranged in a 1^{st} place in the at least two intents in the first sequence, and the instruction corresponding to the first intent is determined based on a historical dialogue status;
executing the instruction corresponding to the first intent, and when determining that the instructions corresponding to all of the at least two intents are not completely obtained, sending a first request to the server, wherein the first request is used to request the instruction corresponding to each intent in the second intent, so that after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
continuing to obtain, from the server, the instruction corresponding to the updated first intent, and stopping sending the first request to the server when determining that the instructions corresponding to all of the at least two intents are obtained.

14. The method according to claim 13, wherein the method specifically comprises:
receiving, from the server, the instruction corresponding to the first intent and a remaining intent, wherein the remaining intent comprises all intents that are in the at least two intents and that are arranged after the first intent, and an arrangement sequence of the remaining intent is consistent with the first sequence;
executing the instruction corresponding to the first intent, and when determining that the instructions corresponding to all of the at least two intents are not completely obtained, sending the first request to the server, wherein the first request comprises the remaining intent, so that after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
continuing to obtain, from the server, the instruction corresponding to the updated first intent and the updated remaining intent, and stopping sending the first request to the server when determining that the instructions corresponding to all of the at least two intents are obtained.

15. The method according to claim 14, wherein the method specifically comprises:
receiving, from the server, the instruction corresponding to the first intent, the remaining intent, and a dialogue status, wherein the dialogue status is determined based on the one intent and the historical dialogue status, and the dialogue status indicates the slot information corresponding to the at least two intents after the instruction corresponding to the first intent is executed;
executing the instruction corresponding to the first intent, and when determining that the instructions corresponding to all of the at least two intents are not completely obtained, sending the first request to the server, wherein the first request comprises the remaining intent and the dialogue status, so that after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
continuing to obtain, from the server, the instruction corresponding to the updated first intent, the updated remaining intent, and the updated dialogue status, and stopping sending the first request to the server when determining that the instructions corresponding to all of the at least two intents are obtained.

16. The method according to claim 12, wherein the first intent comprises only a 1^{st} intent, and the 1^{st} intent is an intent arranged in a 1^{st} place in the at least two intents in the first sequence; and
the method specifically comprises:
receiving, from the server, an instruction corresponding to the 1^{st} intent and a first identifier, wherein a first queue corresponding to the first identifier comprises an instruction corresponding to each intent in a remaining intent, the remaining intent comprises another intent other than the 1^{st} intent in the at least two intents, and an arrangement sequence of queue elements in the first queue is consistent with the first sequence;
executing the instruction corresponding to the 1^{st} intent, and sending the first identifier to the server, wherein the first identifier is used to request the instruction corresponding to each intent in the second intent;
receiving, from the server, a written queue element arranged in sequence in the first queue, wherein an initial queue element of the written queue element comprises at least an instruction corresponding to a next intent that is in the remaining intent and that is arranged after the 1^{st} intent; and
executing, in the first sequence, an instruction corresponding to each intent corresponding to the written queue element, and when determining that the instructions corresponding to all of the at least two intents are not completely obtained, continuing to send the first identifier to the server, so that the server extracts, from the first queue based on the first identifier, a newly written queue element arranged after the written queue element, until it is determined that the instructions corresponding to all of the at least two intents are completely obtained.

17. The method according to claim 16, wherein the first queue further comprises an end identifier arranged after an instruction corresponding to a last intent in the remaining intent, and the end identifier indicates that no instruction corresponding to an intent exists in the first queue; and
the method further comprises:
when a last queue element in the written queue element is the end identifier, determining that the instructions corresponding to all of the at least two intents are completely obtained; or
when a last queue element in the written queue element is not the end identifier, determining that the instructions corresponding to all of the at least two intents are not completely obtained.

18. A speech control method, wherein the method comprises:
receiving, from a terminal device, a speech stream that is input by a user, wherein the speech stream comprises at least two intents;
determining an instruction corresponding to each intent in a first intent, wherein the first intent comprises a part of the at least two intents;
sending the instruction corresponding to each intent in the first intent to the terminal device;
determining an instruction corresponding to each intent in a second intent, wherein the second intent comprises at least one intent arranged after the first intent in the at least two intents in a first sequence, and the first sequence is a delivery sequence of the at least two intents in the speech stream; and
sending the instruction corresponding to each intent in the second intent to the terminal device.

19. The method according to claim 18, wherein the first intent comprises only one intent, and the method specifically comprises:
determining an instruction corresponding to the first intent, wherein an initial intent of the first intent is an intent arranged in a 1^{st} place in the at least two intents in the first sequence, and the instruction corresponding to the first intent is determined based on a historical dialogue status;
sending the instruction corresponding to the first intent to the terminal device;
receiving a first request from the terminal device, wherein the first request is used to request the instruction corresponding to each intent in the second intent; and
after receiving the first request, updating the first intent to a next intent arranged after the first intent in the first sequence, updating the historical dialogue status to slot information corresponding to the at least two intents after the instruction corresponding to the first intent is executed, determining an instruction corresponding to an updated first intent, and sending the instruction corresponding to the updated first intent to the terminal device, until the first request is not received from the terminal device after first duration.

20. The method according to claim 19, wherein the method specifically comprises:
determining the instruction corresponding to the first intent and a remaining intent, wherein the remaining intent comprises all intents that are in the at least two intents and that are arranged after the first intent, and an arrangement sequence of the remaining intent is consistent with the first sequence;
sending the instruction corresponding to the first intent and the remaining intent to the terminal device;
receiving the first request from the terminal device, wherein the first request comprises the remaining intent; and
after receiving the first request, updating the first intent to an intent arranged in a 1^{st} place in the remaining intent in the first sequence, updating the historical dialogue status to the slot information corresponding to the at least two intents after the instruction corresponding to the first intent is executed, determining an instruction corresponding to an updated first intent and an updated remaining intent, and sending the instruction corresponding to the updated first intent and the updated remaining intent to the terminal device, until the first request is not received from the terminal device after the first duration.

21. The method according to claim 20, wherein the method specifically comprises:
determining the instruction corresponding to the first intent, the remaining intent, and a dialogue status, wherein the dialogue status is determined based on the one intent and the historical dialogue status, and the dialogue status indicates the slot information corresponding to the at least two intents after the instruction corresponding to the first intent is executed;
sending the instruction corresponding to the first intent, the remaining intent, and the dialogue status to the terminal device;
receiving the first request from the terminal device, wherein the first request comprises the remaining intent and the dialogue status; and
after receiving the first request, updating the first intent to the intent arranged in the 1^{st} place in the remaining intent in the first sequence, updating the historical dialogue status to the dialogue status, determining the instruction corresponding to the updated first intent, the updated remaining intent, and the updated dialogue status, and sending the instruction corresponding to the updated first intent, the updated remaining intent, and the updated dialogue status to the terminal device, until the first request is not received from the terminal device after the first duration.

22. The method according to claim 18, wherein the first intent comprises only a 1^{st} intent, and the 1^{st} intent is an intent arranged in a 1^{st} place in the at least two intents in the first sequence; and
the method specifically comprises:
determining an instruction corresponding to each intent in the at least two intents and a first identifier;
writing, into a first queue corresponding to the first identifier, an instruction corresponding to each intent in a remaining intent, wherein the remaining intent comprises another intent other than the 1^{st} intent in the at least two intents, and an arrangement sequence of queue elements in the first queue is consistent with the first sequence; and sending an instruction corresponding to the 1^{st} intent and the first identifier to the terminal device;
receiving the first identifier from the terminal device, wherein the first identifier is used to request the instruction corresponding to each intent in the second intent; and
after receiving the first identifier, extracting, from the first queue based on the first identifier, a written queue element arranged in sequence, wherein an initial queue element of the written queue element comprises at least an instruction corresponding to a next intent that is in the remaining intent and that is arranged after the 1^{st} intent; and sending the written queue element to the terminal device, until the first identifier is not received from the terminal device after second duration.

23. The method according to claim 22, wherein the method further comprises:
after an instruction corresponding to a last intent in the remaining intent is written into the first queue, writing, in the first queue, an end identifier after the instruction corresponding to the last intent in the remaining intent, wherein the end identifier indicates that no instruction corresponding to an intent exists in the first queue.

24. A speech control method, wherein the method comprises:
obtaining a speech stream that is input by a user, wherein the speech stream comprises at least two intents;
sending the speech stream to a server, and determining an instruction corresponding to each intent in the at least two intents;
obtaining, from a terminal device and/or the server, an instruction corresponding to each intent in a first intent, wherein the first intent comprises a part of the at least two intents;
executing, in a first sequence, the instruction corresponding to each intent in the first intent, wherein the first sequence is a delivery sequence of the at least two intents in the speech stream; and when determining that instructions corresponding to all of the at least two intents are not completely obtained, obtaining, from the terminal device and/or the server, an instruction corresponding to each intent in a second intent, wherein the second intent comprises at least one intent that is in the at least two intents and that is arranged after the first intent; and
executing, in the first sequence, the instruction corresponding to each intent in the second intent, until the instruction corresponding to each intent in the at least two intents is executed.

25. The method according to claim 24, wherein the first intent comprises only one intent, and the method specifically comprises:
obtaining, from the terminal device and/or the server, the instruction corresponding to each intent in the first intent, wherein an initial intent of the first intent is an intent arranged in a 1^{st} place in the at least two intents in the first sequence, and an instruction corresponding to the first intent is determined based on a historical dialogue status;
executing the instruction corresponding to the first intent, and when determining that the instructions corresponding to all of the at least two intents are not completely obtained, sending a first request to the server, wherein the first request is used to request the instruction corresponding to each intent in the second intent, so that after receiving the first request, the server updates the first intent to a next intent arranged after the first intent in the first sequence, updates the historical dialogue status to slot information corresponding to the at least two intents after the instruction corresponding to the first intent is executed, and determines an instruction corresponding to an updated first intent; and
continuing to determine to obtain, from the terminal device and/or the server, the instruction corresponding to the updated first intent, and stopping sending the first request to the server when determining that the instructions corresponding to all of the at least two intents are obtained.

26. The method according to claim 25, wherein the method specifically comprises:
obtaining, from the terminal device and/or the server, the instruction corresponding to each intent in the first intent and a remaining intent, wherein the remaining intent comprises all intents that are in the at least two intents and that are arranged after the first intent, and an arrangement sequence of the remaining intent is consistent with the first sequence;
executing the instruction corresponding to the first intent, and when determining that the instructions corresponding to all of the at least two intents are not completely obtained, sending the first request to the server, wherein the first request comprises the remaining intent, so that after receiving the first request, the server updates the first intent to an intent arranged in a 1^{st} place in the remaining intent in the first sequence, updates the historical dialogue status to the slot information corresponding to the at least two intents after the instruction corresponding to the first intent is executed, and determines an instruction corresponding to an updated first intent and an updated remaining intent; and
continuing to determine to obtain, from the terminal device and/or the server, the instruction corresponding to the updated first intent and the updated remaining intent, and stopping sending the first request to the server when determining that the instructions corresponding to all of the at least two intents are obtained.

27. The method according to claim 26, wherein the method specifically comprises:
obtaining, from the terminal device and/or the server, the instruction corresponding to each intent in the first intent, the remaining intent, and a dialogue status, wherein the dialogue status is determined based on the one intent and the historical dialogue status, and the dialogue status indicates the slot information corresponding to the at least two intents after the instruction corresponding to the first intent is executed;
executing the instruction corresponding to the first intent, and when determining that the instructions corresponding to all of the at least two intents are not completely obtained, sending the first request to the server, wherein the first request comprises the remaining intent and the dialogue status, so that after receiving the first request, the server updates the first intent to the intent arranged in the 1^{st} place in the remaining intent in the first sequence, updates the historical dialogue status to the dialogue status, and determines the instruction corresponding to the updated first intent, the updated remaining intent, and the updated dialogue status; and
continuing to determine to obtain, from the terminal device and/or the server, the instruction corresponding to the updated first intent, the updated remaining intent, and the updated dialogue status, and stopping sending the first request to the server when determining that the instructions corresponding to all of the at least two intents are obtained.

28. A terminal device, comprising a memory and a processor, wherein
the memory is configured to store program instructions; and
the processor is configured to invoke the program instructions in the memory, so that the terminal device performs the speech control method according to any one of claims 1 to 11, or the terminal device performs the speech control method according to any one of claims 12 to 17, or the terminal device performs the speech control method according to any one of claims 24 to 27.

29. A server, comprising a memory and a processor, wherein
the memory is configured to store program instructions; and
the processor is configured to invoke the program instructions in the memory, so that the server performs the speech control method according to any one of claims 18 to 23.

30. A communication system, comprising: a terminal device that performs the speech control method according to any one of claims 12 to 17, and a server that performs the speech control method according to any one of claims 18 to 23; or
a terminal device that performs the speech control method according to any one of claims 24 to 27, and a server that performs the speech control method according to any one of claims 18 to 23.

31. A computer-readable storage medium, comprising computer instructions, wherein when the computer instructions are run on a communication device, the communication device is enabled to perform the speech control method according to any one of claims 1 to 11, or the communication device is enabled to perform the speech control method according to any one of claims 12 to 17, or the communication device is enabled to perform the speech control method according to any one of claims 18 to 23, or the communication device is enabled to perform the speech control method according to any one of claims 24 to 27.

32. A computer program product, wherein when the computer program product runs on a computer, the computer is enabled to perform the speech control method according to any one of claims 1 to 11, or the computer is enabled to perform the speech control method according to any one of claims 12 to 17, or the computer is enabled to perform the speech control method according to any one of claims 18 to 23, or the computer is enabled to perform the speech control method according to any one of claims 24 to 27.
